(19) Europäisches Patentamt / European Patent Office / Office européen des brevets

(11) **EP 4 176 004 B1**

(12) **EUROPEAN PATENT SPECIFICATION**

(45) Date of publication and mention of the grant of the patent:
**12.03.2025 Bulletin 2025/11**

(21) Application number: **21739644.9**

(22) Date of filing: **02.07.2021**

(51) International Patent Classification (IPC):
***C08L 23/12*** *(2006.01)* ***C08L 23/16*** *(2006.01)*
***C08L 23/14*** *(2006.01)*

(52) Cooperative Patent Classification (CPC):
(C-Sets available)
**C08L 23/12;** C08L 23/14; C08L 2203/162; C08L 2205/03; C08L 2205/035; C08L 2207/02
(Cont.)

(86) International application number:
**PCT/EP2021/068369**

(87) International publication number:
**WO 2022/003170 (06.01.2022 Gazette 2022/01)**

(54) **A THERMOPLASTIC COMPOSITION HAVING IMPROVED MECHANICAL PROPERTIES**

THERMOPLASTISCHE ZUSAMMENSETZUNG MIT VERBESSERTEN MECHANISCHEN EIGENSCHAFTEN

COMPOSITION THERMOPLASTIQUE PRÉSENTANT DES PROPRIÉTÉS MÉCANIQUES AMÉLIORÉES

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **03.07.2020 EP 20183968**

(43) Date of publication of application:
**10.05.2023 Bulletin 2023/19**

(60) Divisional application:
**25152598.6**

(73) Proprietor: **Sika Technology AG**
**6340 Baar (CH)**

(72) Inventors:
- **SCHLÄPFER, Jean-Luc**
  **6064 Kerns (CH)**
- **ROSKAMP, Robert**
  **6460 Altdorf (CH)**
- **FÄH, Christoph**
  **6010 Kriens (CH)**
- **PFISTERER, Harald**
  **6330 Cham (CH)**
- **BUCHER, Ramon**
  **6064 Kerns (CH)**
- **WALLIMANN, Helena**
  **6055 Alpnach (CH)**

(74) Representative: **Sika Patent Attorneys**
**C/o Sika Technology AG**
**Corp. IP Dept.**
**Tüffenwies 16**
**8048 Zürich (CH)**

(56) References cited:
**EP-A1- 0 009 238**
**EP-A1- 1 587 668**
**EP-A1- 3 110 885**
**WO-A1-2019/213345**
**CN-A- 106 633 361**
**GB-A- 1 600 580**
**US-A1- 2007 208 139**
**US-A1- 2020 207 960**
**US-B2- 7 662 885**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).



**(Cont. next page)**

(52) Cooperative Patent Classification (CPC): (Cont.)

C-Sets
**C08L 23/12, C08L 23/16, C08L 23/0815;**
C08L 23/14, C08L 23/0815, C08L 23/16;
C08L 23/14, C08L 23/0815, C08L 23/22

## Description

### Technical field

The invention relates to thermoplastic compositions comprising a thermoplastic polymer component and at least one elastomer. The invention also relates to a sealing device, such as a waterproofing membrane, obtained by using such thermoplastic compositions, and to a method for producing a sealing device.

### Background of the invention

In the field of construction polymeric sheets, which are often referred to as membranes or panels, are used to protect underground and above ground constructions, such as basements, tunnels, roofs against penetration of water. Waterproofing membranes are applied, for example, to prevent ingress of water through cracks that develop in the concrete structure due to building settlement, load deflection or concrete shrinkage. Roofing membranes are commonly used for waterproofing of flat and low-sloped roof structures. The membranes are typically delivered to a construction site in form of rolls, transferred to the place of installation, unrolled, and adhered to the substrate to be waterproofed. The substrate on which the membrane is adhered may be comprised of variety of materials depending on the installation site. The substrate may, for example, be a concrete, fiber concrete, metal, or plywood, or it may include an insulation board or recover board and/or an existing membrane. Waterproofing membranes are also used in form of tapes for sealing and waterproofing of construction gaps in building facades, for example gaps between a building structure and window or curtain wall components.

Commonly used materials for roofing and waterproofing membranes and tapes include plastics, especially thermoplastics such as plasticized polyvinylchloride (p-PVC), thermoplastic polyolefin elastomers (TPO, TPE-O), and elastomers such as ethylene-propylene diene monomer (EPDM) rubber. Thermoplastic polyolefin elastomers are heterophasic polymer systems comprising a high crystallinity base polyolefin and a low-crystallinity or amorphous polyolefin modifier. Waterproofing membranes based on crosslinked EPDM are very flexible and resistant to weathering but joints formed between overlapped portions of adjacent membranes cannot be sealed by heat-welding due to the chemically crosslinked polymer structure. Membranes composed of TPO materials are heat-weldable and less expensive than EPDM-membranes, but they are also more rigid, which can be a disadvantage in some applications. Membranes based on plasticized PVC are more flexible than membranes based on TPO materials, but they also contain environmentally harmful plasticizers and heavy metal additives such as flame retardants that may restrict their use in some applications.

The inferior flexibility of TPO-based membranes compared to plasticized PVC-based membranes is a well-known problem and various approaches have been taken to provide a TPO material with increased flexibility. One approach is based on increasing the proportion of the elastomer component in a TPO-material to obtain a membrane with reduced flexural modulus. However, increasing the proportion of the elastomer component, such as EPM or EPDM over 20 wt.-%, increases the tackiness of the TPO-material and results in an adverse effect known as blocking, which can be characterized as increased adhesion between adjacent layers, which have been pressed together. The blocking of the membrane complicates various post-processing steps such as cutting, welding, stacking, and unwinding from a roll. Organic and inorganic anti-blocking agents are typically used to decrease the blocking of thin polyolefin films. The tackiness can also be reduced by crosslinking essentially the whole portion of the elastomer component present in the TPO-material. Such modified TPOs can be obtained by melt-blending a statically or dynamically crosslinked elastomer component with a thermoplastic component. TPOs containing a dynamically vulcanized (crosslinked) elastomer component are also known as thermoplastic vulcanizates (TPV, TPE-v).

US 2007 /0208139 A1 discloses thermoplastic sheets comprising a) from 5 to 98.5 wt % of an essentially uncrosslinked, random ethylene copolymer having from 20 wt% to 90 wt % repeat units from ethylene and from 10 wt % to 80 wt % of repeat units from one or more other ethylenically unsaturated monomers, b) from 0.3 to 83.5 wt% of a polypropylene-based crystalline thermoplastic, and c) from 0.3 to 24.5 wt % of a vulcanized rubber dispersed phase. The disclosed thermoplastic sheets are described to have welding characteristics and reduced blocking in the extrusion step of producing the sheets.

One significant limitation of polymeric membranes is the high difficulty to bond them adhesively, i.e. by using an adhesive. PVC-based membranes are somewhat an exception, since they can usually be bonded by using the current adhesives technology. Due to the low surface energy, polyolefin-based membranes are notoriously difficult to bond by other adhesives than pressure sensitive adhesives (PSA), i.e. with adhesives that are not permanently tacky. TPO-based membranes may be bonded with each other by heat welding and in roofing applications, the membrane can be adhered to a roof deck by using mechanical methods. However, significant difficulties arise regarding the performance of commonly available adhesives used in the field of construction whenever polyolefin-based membranes should be adhesively adhered to a substrate or with each other. Chemically crosslinked EPDM-membranes are somewhat easier to bond with

non-PSA adhesives, such as with moisture curable polyurethane-based adhesives. However, crosslinking of the EPDM material is typically conducted in a separate production step, which increases the production costs compared to TPO-based membranes. Adhesive bonding of TPO-based membranes using reactive adhesives is, therefore, a challenge and often requires vigorous pre-treatment of the membrane by chemical modification, either by using a reactive primer or with a flame ("flaming"), oxofluorination, plasma, corona, or similar techniques. The use of primers including highly reactive compounds that enable adhesion by chemical modification of the membrane surface is often not feasible in large area applications such as waterproofing of roof substrates. In all these cases, the surface modification is a cumbersome additional step for bonding of a TPO-based membrane or shaped articles by adhesives.

There thus remains a need for a novel type of thermoplastic composition suitable for providing flexible waterproofing membranes, which can be adhesively bonded to various substrates, such as wood and concrete surfaces, using reactive adhesives that are not permanently tacky.

**Summary of the invention**

The object of the present invention is to provide a thermoplastic composition for providing sealing devices, such as membrane sheets, which can be bonded by reactive adhesives, particularly with reactive adhesives that are not permanently tacky.

Another object of the present invention is to provide a thermoplastic composition that exhibits low blocking and high flexibility such that the membrane sheets obtained by using the thermoplastic composition can be used in various waterproofing applications, especially in sealing and waterproofing of construction gaps in building facades, for example the gaps between a building structure and window or curtain wall components.

The subject of the present invention is a thermoplastic composition as defined in claim 1.

It was surprisingly found out that a thermoplastic composition comprising at least one propylene copolymer having a propylene content of at least 60 wt.-%, at least one ethylene copolymer having an ethylene content of at least 50 wt.-%, and at least one elastomer, can solve or at least mitigate the problems of the State-of-the-Art thermoplastic polyolefin compositions used for providing membrane sheets.

It was also surprisingly found out that membrane sheets obtained by using the thermoplastic composition of the present invention can be bonded to plywood and concrete substrates by two different types of polyurethane-based reactive adhesives without use of primers or any type of surface pre-treatment techniques. Furthermore, the thermoplastic material exhibits surprisingly low tackiness, which enables storing of membrane sheets in form of rolls even at elevated temperatures without blocking of the surfaces of the membrane sheets.

One of the advantages of the thermoplastic composition of the present invention is that in addition to the low blocking, the membrane sheets obtained by using the thermoplastic composition show an improved flexibility compared to State of the Art TPO-based membranes, which enable their use in in various waterproofing applications including sealing and waterproofing of construction gaps in building facades.

Another advantage of the thermoplastic composition of the present invention is that the membrane sheets can be produced from the thermoplastic composition using a single-step production process without any post-treatment steps such as chemical crosslinking of the material. Consequently, the membrane sheets can be produced with lower costs compared, for example, to the membrane sheets composed of crosslinked EPDM-material.

Other subjects of the present invention are presented in other independent claims. Preferred aspects of the invention are presented in the dependent claims.

**Detailed description of the invention**

The subject of the present invention is a thermoplastic composition comprising:

a) A thermoplastic polymer component **TP** and
b) At least one elastomer **E,** wherein

the thermoplastic polymer component **TP** comprises at least one propylene copolymer **TP1** having a propylene content of at least 60 wt.-%, preferably at least 70 wt.-%, based on the weight of the propylene copolymer **TP1** and at least one ethylene copolymer **TP2** having an ethylene content of at least 50 wt.-%, preferably at least 55 wt.-%, based on the weight of the ethylene copolymer **TP2,** wherein the at least one elastomer E comprises at least one butyl rubber **E1** and/or at least one ethylene propylene diene monomer rubber **E2** and wherein the at least one propylene copolymer **TP1** is a propylene-ethylene random copolymer having an ethylene content of 5 - 20 wt.-%, based on the weight of the propylene-ethylene random copolymer, and wherein the at least one ethylene copolymer **TP2** is an ethylene-octene random copolymer.

Substance names beginning with "poly" designate substances which formally contain, per molecule, two or more of the functional groups occurring in their names. For instance, a polyol refers to a compound having at least two hydroxyl

groups. A polyether refers to a compound having at least two ether groups.

The term "polymer" designates a collective of chemically uniform macromolecules produced by a polyreaction (polymerization, polyaddition, polycondensation) where the macromolecules differ with respect to their degree of polymerization, molecular weight and chain length. The term also comprises derivatives of said collective of macromolecules resulting from polyreactions, that is, compounds which are obtained by reactions such as, for example, additions or substitutions, of functional groups in predetermined macromolecules and which may be chemically uniform or chemically nonuniform.

The term "monomer" designates a molecule having at least one polymerizable group. A monomeric di- or polyisocyanate contains in particular no urethane groups. Oligomers or polymer products of diisocyanate monomers such as adducts of monomeric diisocyanates are not monomeric diisocyanates. The monomeric di- or polyisocyanate has in particular a molecular weight of not more than 1000 g/mol, preferably not more than 500 g/mol, and more preferably not more than 400 g/mol.

"Aminofunctional compound" refers to a compound which contains an amino group.

"Primary amino group" and "primary amine nitrogen" refer respectively to an $NH_2$ group and the nitrogen atom thereof that is bonded to an organic radical, and "secondary amino group" and "secondary amine nitrogen" refer respectively to an NH group and the nitrogen atom thereof that is bonded to two organic radicals which may also together be part of a ring, and "tertiary amino group" and "tertiary amine nitrogen" refer respectively to an N group and to the nitrogen atom thereof that is bonded to three organic radicals, two or three of which together may also be part of one or more rings. Accordingly, "primary aminosilanes" are aminosilanes comprising a primary amino group and "secondary aminosilanes" are aminosilanes comprising a secondary amino group. The latter also encompasses compounds having both a primary and a secondary amino group.

"Polyoxyalkylene radical" refers to a linear hydrocarbyl radical which contains ether groups and contains more than two repeat units of the (O-R) type in succession, where R is an alkylene radical, as for example from the polyaddition of ethylene oxide or 1,2-propylene oxide onto starter molecules having two active hydrogen atoms.

The term "molecular weight" designates the molar mass (g/mol) of a molecule or a part of a molecule, also referred to as "moiety". The term "average molecular weight" refers to number average molecular weight ($M_n$) of an oligomeric or polymeric mixture of molecules or moieties. The molecular weight may be determined by conventional methods, preferably by gel permeationchromatography (GPC) using polystyrene as standard, styrene-divinylbenzene gel with porosity of 100 Angstrom, 1000 Angstrom and 10000 Angstrom as the column and, depending on the molecule, tetrahydrofurane as a solvent, at 35°C, or 1,2,4-trichlorobenzene as a solvent, at 160°C.

The term "peak melting temperature ($T_m$)" refers to a melting point determined as a maximum of the curve determined by means of differential scanning calorimetry (DSC) using the measurement method as defined in ISO 11357 standard using a heating rate of 2°C/min. The measurements can be performed with a Mettler Toledo DSC 3+ device and the $T_m$ values can be determined from the measured DSC-curve with the help of the DSC-software. In case the measured DSC-curve shows several peak temperatures, the first peak temperature coming from the lower temperature side in the thermogram is taken as the peak melting temperature ($T_m$).

The term "glass transition temperature" ($T_g$) refers to the temperature above which temperature a polymer component becomes soft and pliable, and below which it becomes hard and glassy. The glass transition temperature ($T_g$) is preferably determined by dynamical mechanical analysis (DMA) as the peak of the measured loss modulus (G") curve using an applied frequency of 1 Hz and a strain level of 0.1%.

"Comonomer content of a copolymer" refers to the total amount of comonomers in the copolymer given in wt.-% or mol-%. The comonomer content can be determined by IR spectroscopy or by quantitative nuclearmagnetic resonance (NMR) measurements.

The term "elastomer" designates a polymer or a polymer blend, which is capable of recovering from large deformations, and which can be, or already is, modified to a state in which it is essentially insoluble (but can swell) in a boiling solvent, in particular xylene. Typical elastomers are capable of being elongated or deformed to at least 200% of their original dimension under an externally applied force, and will substantially resume the original dimensions, sustaining only small permanent set (typically no more than about 20%), after the external force is released. As used herein, the term "elastomer" may be used interchangeably with the term "rubber."

The term "crosslinked" refers to a polymer matrix, in which the polymer chains are inter-connected by a plurality of covalent bonds that are stable mechanically and thermally. Other possible forms of crosslinked polymers such as physically crosslinked polymers are not regarded as "crosslinked" in the context of the present disclosure. The terms "cured" and "vulcanized" may be used interchangeably with the term "crosslinked".

The term "crosslinking degree" refers to a proportion of the component, which is insoluble in boiling xylene. The percentage of insoluble proportion can be determined by refluxing a test specimen in boiling xylene, weighting the dried residue and making suitable corrections for other soluble and insoluble components present in the tested composition. Preferably, the crosslinking degree is measured by using a method as defined in ISO 10147 standard.

The "amount or content of at least one component X" in a composition, for example "the amount of the at least one

polymer P1" refers to the sum of the individual amounts of all polymers P1 contained in the composition. Furthermore, in case the composition comprises 20 wt.-% of at least one polymer P1, the sum of the amounts of all polymers P1 contained in the composition equals 20 wt.-%.

The term "room temperature" designates a temperature of 23°C.

The thermoplastic composition of the present invention comprises a thermoplastic polymer component **TP** and at least one elastomer **E.** The term "thermoplastic polymer" refers in the present disclosure to polymers which can be melted and re-solidified with little or no change in physical properties. It goes without saying that the thermoplastic polymer component **TP** is different from the at least one elastomer **E.**

The thermoplastic polymer component **TP** comprises at least one propylene copolymer **TP1** having a propylene content of at least 60 wt.-%, preferably at least 70 wt.-%, more preferably at least 75 wt.-%, based on the weight of the propylene copolymer.

According to the invention, the at least one propylene copolymer **TP1** is a propylene-ethylene random copolymer having an ethylene content of 5 - 20 wt.-%, preferably 9 - 18 wt.-%, more preferably 12 - 18 wt.-%, even more preferably 12 - 16 wt.-%, based on the weight of the propylene-ethylene copolymer.

According to one or more embodiments, the at least one propylene copolymer **TP1** has

- a flexural modulus at 23°C determined according to ISO 178:2019 standard of not more than 100 MPa, preferably not more than 75 MPa, more preferably not more than 65 MPa, even more preferably not more than 50 MPa and/or
- a melt flow rate (230°C/2.16 kg) determined according to ISO 1133 standard of not more than 50 g/10 min, preferably not more than 35 g/10 min, more preferably not more than 25 g/10 min, even more preferably not more than 20 g/10 min and/or
- a density at 23°C determined according to ASTM D-792 standard of 0.850 - 0.900 g/cm$^3$, preferably 0.855 - 0.890 g/cm$^3$.

Particularly suitable propylene-ethylene copolymers for use as the at least one propylene copolymer **TP1** include the propylene-ethylene copolymers, which are commonly characterized as "propylene-based elastomers". These are commercially available, for example, under the trade name of Versify® (from Dow Chemicals) and under the trade name of Vistamaxx® (from Exxon Mobil).

According to one or more embodiments, the at least one propylene copolymer **TP1** comprises 15 - 75 wt.-%, preferably 25 - 70 wt.-%, more preferably 30 - 65 wt.-%, even more preferably 35 - 60 wt.-%, even more preferably 35 - 55 wt.-%, still more preferably 40 - 50 wt.-%, of the total weight of the thermoplastic composition.

The thermoplastic polymer component **TP** further comprises at least one ethylene copolymer **TP2** having an ethylene content of at least 50 wt.-%, preferably at least 55 wt.-%, more preferably at least 65 wt.-%, based on the weight of the ethylene copolymer **TP2**.

The at least one ethylene copolymer **TP2** is preferably an ethylene-α-olefin copolymer. Suitable ethylene-α-olefin copolymers include ethylene-α-olefin random and block copolymers of ethylene and one or more $C_3$-$C_{20}$ α-olefin monomers, in particular one or more of propylene, 1-butene, 1-pentene, 1-hexene, 1- heptene, 1-octene, 1-decene, 1-dodecene, and 1-hexadodecene.

Particularly suitable ethylene-α-olefin copolymers include, for example, ethylene-based plastomers, which are commercially available, for example, under the trade name of Affinity®, such as Affinity® EG 8100G, Affinity® EG 8200G, Affinity® SL 8110G, Affinity® KC 8852G, Affinity® VP 8770G, and Affinity® PF 1140G (all from Dow Chemical Company); under the trade name of Exact®, such as Exact® 3024, Exact® 3027, Exact® 3128, Exact® 3131, Exact® 4049, Exact® 4053, Exact® 5371, and Exact® 8203 (all from Exxon Mobil); and under the trade name of Queo® (from Borealis AG).

Other suitable ethylene-α-olefin copolymers include, for example, ethylene-based polyolefin elastomers (POE), which are commercially available, for example, under the trade name of Engage®, such as Engage® 7256, Engage® 7467, Engage® 7447, Engage® 8003, Engage® 8100, Engage® 8480, Engage® 8540, Engage® 8440, Engage® 8450, Engage® 8452, Engage® 8200, and Engage® 8414 (all from Dow Chemical Company).

Further suitable ethylene-α-olefin copolymers include ethylene-α-olefin block copolymers, such as ethylene-based olefin block copolymers (OBC), which are commercially available, for example, under the trade name of Infuse®, such as Infuse® 9100, Infuse® 9107, Infuse® 9500, Infuse® 9507, and Infuse® 9530 (all from Dow Chemical Company).

According to one or more embodiments, the at least one ethylene copolymer **TP2** is an ethylene-octene random copolymer, preferably having a comonomer (butene or octene) content of 5 - 50 wt.-%, more preferably 10 - 45 wt.-%, even more preferably 15 - 40 wt.-%, based on the weight of the ethylene copolymer **TP2.**

According to one or more embodiments, the at least one ethylene copolymer **TP2** is an ethylene-octene random copolymer, preferably having an octene content of 5 - 45 wt.-%, more preferably 10 - 40 wt.-%, even more preferably 15 - 35 wt.-%, still more preferably 15 - 30 wt.-%, such as 15 - 25 wt.-%, based on the weight of the ethylene-octene copolymer.

The proportion of butene or octene in an ethylene-butene copolymer or in an ethylene-octene copolymer can be determined directly by 1H-NMR spectroscopy method known to a person skilled in the art.

According to one or more embodiments, the octene content of the ethylene-octene copolymer is determined using the method as described below.

Method for determining octene content of ethyne-octene copolymers

1H-NMR spectroscopy is carried out with a Bruker Ultrashield 300 MHz. A sample of 30-35 mg the copolymer is dissolved in 0.7 mL of 1,2-dichlorobenzene-d4 for 2 hours at 150 °C and 256 scans are accumulated at 130°C. For the calculation of the 1-octene content, the following formula is used:

$$\frac{l_{CH_3}}{l_{CH_2} \cdot \left(1 - \frac{1}{3}x\right) + \frac{l_{CH_3}}{3}} = \frac{1}{3}x$$

where $I_{CH3}$ corresponds to the integral of the peak at 0.9 ppm assigned to the methyl terminal group,
$I_{CH2}$ corresponds to the integral of the peak at 1.3 ppm which is assigned to the H atoms of the CH2 groups of the base structure and of the 1-octene side chains, and
x corresponds to the content of octene in mol.-%. The content of octene in wt.-% can be calculated from the content of octene in mol.-% by using the following formula:

$$\frac{mol\ \%_{octene} \cdot M_{W_{octene}}}{mol\ \%_{ethylene} \cdot M_{W_{ethylene}} + mol\ \%_{octene} \cdot M_{W_{octene}}} \cdot 100\ \%$$

The measured peak positions correspond to the data presented in the literature.

According to one or more embodiments, the least one ethylene copolymer **TP2** has

- a flexural modulus at 23°C determined according to ISO 178:2019 standard of not more than 150 MPa, preferably not more than 125 MPa, more preferably not more than 100 MPa, even more preferably not more than 85 MPa and/or
- a melt flow rate (190°C/2.16 kg) determined according to ISO 1133 standard of not more than 50 g/10 min, preferably not more than 35 g/10 min, more preferably not more than 25 g/10 min, even more preferably not more than 15 g/10 min and/or
- a density at 23°C determined according to ASTM D-792 standard of 0.850 - 0.915 g/cm$^3$, preferably 0.855 - 0.900 g/cm$^3$.

Particularly suitable ethylene-octene copolymers for use as the at least one ethylene copolymer **TP2** include the ethylene-octene copolymers, which are commercially available, for example, under the trade name of Engage® (from Dow Chemicals), under the trade name of Exact® (from Exxon Mobil), and under the trade name of Queo® (from Borealis AG).

According to one or more embodiments, the at least one ethylene copolymer **TP2** comprises 5 - 45 wt.-%, preferably 10 - 40 wt.-%, more preferably 10 - 35 wt.-%, even more preferably 15 - 35 wt.-%, still more preferably 20 - 30 wt.-% of the total weight of the thermoplastic composition.

According to one or more embodiments, the thermoplastic polymer component **TP** further comprises at least one thermoplastic polyolefin elastomer **TP3** different from the at least one propylene copolymer **TP1** and from the at least one ethylene copolymer **TP2.**

The term "thermoplastic polyolefin elastomer (TPO, TPE-O)" refers to specific type of thermoplastic elastomers (TPE), which are provided as physical or reactor blends of olefinic constituents. TPOs are heterophasic polymer systems comprising a high crystallinity base polyolefin and a low-crystallinity or amorphous polyolefin modifier. The heterophasic phase morphology consists of a matrix phase composed primarily of the base polyolefin and a dispersed phase composed primarily of the polyolefin modifier. Commercially available TPOs include reactor blends of the base polyolefin and the polyolefin modifier, also known as "in-situ TPOs" or "reactor TPOs or "impact copolymers (ICP)", as well as physical blends of the aforementioned components. In case of a reactor-blend type of TPO, the components are typically produced in a sequential polymerization process, wherein the components of the matrix phase are produced in a first reactor and transferred to a second reactor, where the components of the dispersed phase are produced and incorporated as domains in the matrix phase. A physical-blend type of TPO is produced by melt-mixing the base polyolefin with the polyolefin modifier each of which was separately formed prior to blending of the components.

Reactor-blend type TPOs comprising polypropylene homopolymer as the base polymer are often referred to as "heterophasic propylene copolymers (HECO)" whereas reactor-blend type TPOs comprising polypropylene random copolymer as the base polymer are often referred to as "heterophasic propylene random copolymers (RAHECO)". The

term "heterophasic propylene copolymer" encompasses in the present disclosure both the HECO and RAHECO types of heterophasic propylene copolymers.

Depending on the amount of the polyolefin modifier, the commercially available heterophasic propylene copolymers are typically characterized as "impact copolymers" (ICP) or as "reactor-TPOs" or as "soft-TPOs". The main difference between these types of TPOs is that the amount of the polyolefin modifier is typically lower in ICPs than in reactor-TPOs and soft-TPOs, such as not more than 40 wt.-%, particularly not more than 35 wt.-%. Consequently, typical ICPs tend to have a lower xylene cold soluble (XCS) content determined according to ISO 16152 2005 standard as well as higher flexural modulus determined according to ISO 178:2019 standard compared to reactor-TPOs and soft-TPOs.

According to one or more embodiments, the at least one thermoplastic polyolefin elastomer **TP3** is a heterophasic propylene copolymer.

According to one or more embodiments, the at least one thermoplastic polyolefin elastomer **TP3** has

- a flexural modulus at 23°C determined according to ISO 178:2019 standard of not more than 1000 MPa, preferably not more than 750 MPa, more preferably not more than 500 MPa, even more preferably not more than 350 MPa, still more preferably not more than 150 MPa, most preferably not more than 100 MPa and/or
- a melting temperature determined by DSC according to ISO 11357 standard using a heating rate of 2°C/min of at least 100°C, preferably at least 110°C, more preferably at least 115°C, even more preferably at least 120°C and/or
- a melt flow rate (230°C/2.16 kg) determined according to ISO 1133 standard of not more than 50 g/10 min, preferably not more than 35 g/10 min, more preferably not more than 30 g/10 min, even more preferably not more than 25 g/10 min and/or
- a xylene cold soluble content determined according to ISO 16152-2005 standard of at least 10 wt.-%, preferably at least 25 wt.-%, more preferably at least 35 wt.-%, even more preferably at least 45 wt.-%, still more preferably at least 55 wt.-%, such as in the range of 15 - 95 wt.-%, preferably 25 - 90 wt.-%, more preferably 35 - 85 wt.-%, even more preferably 45 - 80 wt.-%, still more preferably 50 - 70 wt.-%.

According to one or more embodiments, the at least one thermoplastic polyolefin elastomer **TP3** is a heterophasic propylene copolymer comprising:

- A) at least one polypropylene having a melting temperature ($T_m$) of 100°C or more, preferably a propylene homopolymer and/or a random copolymer of propylene having a comonomer content of less than 10 wt.-%, preferably less than 5 wt.-%, based on the weight of the copolymer and
- B) at least one polyolefin having a glass transition temperature ($T_g$) of -20°C or less, preferably an ethylene copolymer having a comonomer content of at least 5 wt.-%, preferably at least 10 wt.-%, based on the weight of the copolymer, preferably having a glass transition temperature ($T_g$) of -25°C or less, more preferably -35°C or less, preferably an ethylene-propylene rubber (EPR),

wherein the heterophasic propylene copolymer comprises a matrix phase composed primarily of A) and a dispersed phase composed primarily of B).

According to one or more embodiments, the heterophasic propylene copolymer is a reactor blend of A) and B), wherein the reactor blend has preferably been obtained by using a sequential polymerization process, wherein constituents of the matrix phase are produced in a first reactor and transferred to a second reactor where constituents of the dispersed phase are produced and incorporated as domains into the matrix phase.

Particularly suitable heterophasic propylene copolymers of use as the at least one thermoplastic polyolefin elastomer **TP3** include, for example, "reactor TPOs" and "soft TPOs" produced with LyondellBasell's Catalloy process technology, which are available under the trade names of Adflex®, Adsyl®, Clyrell®, Hifax®, Hiflex®, and Softell®, such as Hifax® CA 10A, Hifax® CA 12A, and Hifax® CA 60 A, and Hifax® CA 212 A. Further suitable heterophasic propylene copolymers are commercially available under the trade name of Borsoft® (from Borealis Polymers), such as Borsoft® SD233 CF.

According to one or more embodiments, the at least one thermoplastic polyolefin elastomer **TP3** comprises 0.1 - 30 wt.-%, preferably 0.5 - 25 wt.-%, more preferably 1 - 20 wt.-%, even more preferably 1.5 - 15 wt.-%, still more preferably 2.5 - 12.5 wt.-%, of the total weight of the thermoplastic composition.

The thermoplastic composition further comprises at least one elastomer **E.**

The at least one elastomer **E** may be selected from the group consisting of butyl rubber, halogenated butyl rubber, ethylene-propylene diene rubber, natural rubber, chloroprene rubber, synthetic 1,4-cis-polyisoprene, polybutadiene, ethylene-propylene rubber, styrene-butadiene copolymer, isoprene-butadiene copolymer, styrene-isoprene-butadiene rubber, methyl methacrylate-butadiene copolymer, methyl methacrylate-isoprene copolymer, acrylonitrile-isoprene copolymer, and acrylonitrile-butadiene copolymer.

Preferred rubbers to be used as the at least one elastomer **E** have a relatively low degree of unsaturation. The

term "degree of unsaturation" refers in the present disclosure to the ratio of the number of unsaturated carbon-to-carbon bonds to the number of atoms in the linear chain of the average theoretical linear elastomer molecule. The low degree of unsaturation is essential in applications, where shaped articles such as membrane sheets obtained by using the thermoplastic composition must be able to withstand permanent exposure to various environmental factors, particularly UV-radiation. On the other hand, some degree of unsaturation may also be preferred to enable the chain extension and/or crosslinking/ and/or coupling reactions to occur during processing of the thermoplastic composition to shaped articles.

According to one or more embodiments, the at least one elastomer **E** has a mole percent unsaturation of not more than 15, preferably not more than 10, more preferably not more than 5, even more preferably not more than 2.5.

According to one or more embodiments, the at least one elastomer **E** has a Mooney Viscosity (ML 1+8 at 125°C) of not more than 150 MU, preferably not more than 100 MU, more preferably not more than 85 MU, even more preferably not more than 70 MU, still more preferably not more than 55 MU, such as in the range of 10 - 125 MU, preferably 15 - 100 MU, more preferably 15 - 75 MU, even more preferably 20 - 65 MU. The term "Mooney viscosity" refers in the present disclosure to the viscosity measure of rubbers. It is defined as the shearing torque resisting rotation of a cylindrical metal disk (or rotor) embedded in rubber within a cylindrical cavity. The dimensions of the shearing disk viscometer, test temperatures, and procedures for determining Mooney viscosity are defined in ASTM D1646 -19a standard.

According to the invention, the at least one elastomer **E** comprises at least one butyl rubber **E1** and/or at least one ethylene propylene diene monomer (EPDM) rubber **E2**. Generally, the expression "the at least one component X comprises at least one component XN", such as "the at least one elastomer **E** comprises at least one butyl rubber **E1**" is understood to mean in the context of the present disclosure that the thermoplastic composition comprises one or more butyl rubbers **E1** as representatives of the at least one elastomer **E.**

The term "butyl rubber" designates in the present disclosure a polymer derived from a monomer mixture containing a major portion of a $C_4$ to $C_7$ monoolefin monomer, preferably an isoolefin monomer and a minor portion, such as not more than 30 wt.-%, of a $C_4$ to $C_{14}$ multiolefin monomer, preferably a conjugated diolefin.

The preferred $C_4$ to $C_7$ monoolefin monomer may be selected from the group consisting of isobutylene, 2-methyl-1-butene, 3-methyl-1-butene, 2-methyl-2-butene, 4-methyl-1-pentene, and mixtures thereof.

The preferred $C_4$ to $C_{14}$ multiolefin comprises a $C_4$ to $C_{10}$ conjugated diolefin. The preferred $C_4$ to $C_{10}$ conjugated diolefin may be selected from the group comprising isoprene, butadiene, 2,4-dimethylbutadiene, piperyline, 3-methyl-1,3-pentadiene, 2,4-hexadiene, 2-neopentyl-1,3-butadiene, 2-methyl-1,5-hexadiene, 2,5-dimethyl-2,4-hexadiene, 2-methyl-1,4-pentadiene, 2-methyl-1,6-heptadiene, cyclopentadiene, methylcyclopentadiene, cyclohexadiene, 1-vinyl-cyclohexadiene and mixtures thereof.

Preferably, the at least one butyl rubber **E1** is derived from a monomer mixture containing from about 80 wt.-% to about 99 wt.-% of a $C_4$ to $C_7$ monoolefin monomer and from about 1.0 wt.-% to about 20 wt.-% of a $C_4$ to $C_{14}$ multiolefin monomer. More preferably, the monomer mixture contains from about 85 wt.-% to about 99 wt.-% of a $C_4$ to $C_7$ monoolefin monomer and from about 1.0 wt.-% to about 10 wt.-% of a $C_4$ to $C_{14}$ multiolefin monomer. Most preferably, the monomer mixture contains from about 95 wt.-% to about 99 wt.-% of a $C_4$ to $C_7$ monoolefin monomer and from about 1.0 wt.-% to about 5.0 wt.-%of a $C_4$ to $C_{14}$ multiolefin monomer.

The most preferred at least one butyl rubber **E1** is derived from a monomer mixture comprising from about 97 wt.-% to about 99.5 wt.-% of isobutylene and from about 0.5 wt.-% to about 3 wt.-% of isoprene.

It is furthermore possible to include an optional third monomer to produce a butyl terpolymer. For example, it is possible to include a styrenic monomer in the monomer mixture, preferably in an amount up to about 15 wt.-% of the monomer mixture. The preferred styrenic monomer may be selected from the group comprising p-methylstyrene, styrene, $\alpha$-methylstyrene, p-chlorostyrene, p-methoxystyrene, indene, indene derivatives and mixtures thereof. The most preferred styrenic monomer may be selected from the group comprising styrene, p-methylstyrene and mixtures thereof. Other suitable copolymerizable termonomers will be apparent to those of skill in the art.

According to one or more embodiments, the at least one butyl rubber **E1** is a halogenated butyl rubber. The term "halogenated rubber" refers in the present disclosure to a rubber having a halogen content of at least 0.1 mol.-%, wherein the halogen is preferably selected from the group consisting of bromine, chlorine and iodine. Preferred halogenated butyl rubbers to be used as the at least one butyl rubber **E1** have a halogen content of 0.1 - 10 wt.-%, preferably 0.5 - 8 wt.-%, more preferably 0.5 - 5.0 wt.-%, based on the weight of the halogenated butyl rubber.

According to one or more embodiments, the at least one butyl rubber **E1** is a bromobutyl rubber or a chlorobutyl rubber, preferably having a halogen content in the range of 0.1 - 10 wt.-%, more preferably 0.5 - 8 wt.-%, even more preferably 0.5 - 5.0 wt.-%, based on the weight of the halogenated butyl rubber.

The term "EPDM rubber" refers in the present disclosure to terpolymer of ethylene, propylene and a non-conjugated diene. Non-limiting examples of suitable non-conjugated dienes to be used in EPDM rubber include, for example, 5-ethylidene-2-norbornene (ENB); 1,4-hexadiene; 5-methylene-2-norbornene (MNB); 1,6-octadiene; 5-methyl-1,4-hexadiene; 3,7-dimethyl-1,6-octadiene; 1,4-cyclohexadiene; tetrahydroindene; methyltetrahydroindene; dicyclopentadiene; 5-isopropylidene-2-norbornene; and 5-vinyl-norbornene.

Suitable EPDM rubbers for use as the at least one EPDM rubber **E2** have an ethylene content of at least 20 wt.-%,

preferably at least 25 wt.-%, based on the weight of the EPDM rubber and a non-conjugated diene content of not more than 20 wt.-%, preferably not more than 15 wt.-%, based on the weight of the EPDM rubber, with the remaining content being essentially composed of polypropylene.

According to one or more embodiments, the at least one EPDM rubber **E2** has

- an ethylene content of 25 - 85 wt.-%, preferably 35 - 80 wt.-%, more preferably 45 - 80 wt.-%, even more preferably 55 - 75 wt.-%, based on the weight of the EPDM rubber and/or
- a non-conjugated diene content of 1 - 20 wt.-%, preferably 1 - 15 wt.-%, more preferably 2 - 15 wt.-%, even more preferably 2 - 10 wt.-%, based on the weight of the EPDM rubber and/or
- a Mooney Viscosity (ML 1+4 at 125°C) of not more than 125 MU, preferably not more than 100 MU, more preferably not more than 75 MU, even more preferably not more than 65 MU, still more preferably not more than 55 MU, such as in the range of 5 - 100 MU, preferably 10 - 85 MU, more preferably 15
- 75 MU, even more preferably 20 - 65 MU.

Suitable EPMD rubbers are commercially available, for example, under the trade name of Nordel® (from Dow Chemical Company), under the trade name of Buna EP® (from Lanxess), and under the trade name of Vistalon® (from Exxon Mobil).

According to one or more embodiments, the at least one elastomer E comprises 0.5 - 35 wt.-%, preferably 1- 25 wt.-%, more preferably 2.5 - 20 wt.-%, even more preferably 3.5 - 17.5 wt.-%, still more preferably 5 - 15 wt.-%, of the total weight of the thermoplastic composition.

According to one or more embodiments, the at least one elastomer **E** is composed of the at least one butyl rubber **E1** and/or the at least one EPDM rubber **E2**.

According to one or more embodiments, the sum of the amounts of the thermoplastic polymer component **TP** and the at least one elastomer **E** comprises at least 55 wt.-%, preferably at least 65 wt.-%, more preferably at least 70 wt.-%, even more preferably at least 75 wt.-%, still more preferably at least 80 wt.-%, of the total weight of the thermoplastic composition.

The thermoplastic composition may comprise, in addition to the thermoplastic polymer component **TP** and the at least one elastomer **E** various additives, such as fillers, UV- and heat stabilizers, antioxidants, plasticizers, flame retardants, fillers, dyes, pigments, matting agents, antistatic agents, impact modifiers, biocides, and processing aids such as lubricants, slip agents, antiblock agents, and denest aids. The total amount of these types of additives is preferably not more than 45 wt.-%, more preferably not more than 35 wt.-%, even more preferably not more than 25 wt.-%, based on the total weight of the thermoplastic composition.

According to one or more embodiments, the thermoplastic composition further comprises at least one solid particulate filler **F** and/or at least one flame retardant **FR.**

Suitable fillers for use as the at least one solid particulate filler **F** include, for example, inert mineral fillers, such as sand, granite, calcium carbonate, clay, expanded clay, diatomaceous earth, pumice, mica, kaolin, talc, dolomite, xonotlite, perlite, vermiculite, Wollastonite, barite, magnesium carbonate, calcium hydroxide, calcium aluminates, silica, fumed silica, fused silica, aerogels, glass beads, hollow glass spheres, ceramic spheres, bauxite, comminuted concrete, and zeolites.

According to one or more embodiments, the at least one solid particulate filler **F** is selected from the group consisting of calcium carbonate, magnesium carbonate, clay, expanded clay, diatomaceous earth, pumice, mica, kaolin, talc, dolomite, xonotlite, perlite, vermiculite, Wollastonite, barite, calcium hydroxide, calcium aluminates, silica, fumed silica, and fused silica.

The at least one solid particulate filler **F** is preferably present in the thermoplastic composition in the form of finely divided particles. The term "finely divided particles" refers here to particles, whose median particle size $d_{50}$ does not exceed 250 $\mu$m, preferably 150 $\mu$m, more preferably 50 $\mu$m. The term "median particle size $d_{50}$" refers in the present disclosure to a particle size below which 50% of all particles by volume are smaller than the $d_{50}$ value. The particle size distribution can be determined by sieve analysis according to the method as described in ASTM C136/C136M -2014 standard ("Standard Test Method for Sieve Analysis of Fine and Coarse Aggregates).

According to one or more embodiments, the at least one solid particulate filler **F** has a median particle size $d_{50}$ in the range of 0.1 - 100 $\mu$m, preferably 0.15 - 50 $\mu$m, more preferably 0.25 - 25 $\mu$m, even more preferably 0.35 - 15 $\mu$m, still more preferably 0.5 - 10 $\mu$m.

According to one or more embodiments, the at least one solid particulate filler **F** comprises 0.5 - 35 wt.-%, preferably 1 - 30 wt.-%, more preferably 5 - 30 wt.-%, even more preferably 10 - 25 wt.-%, still more preferably 12.5 - 25 wt.-%, of the total weight of the thermoplastic composition.

According to one or more embodiments, the thermoplastic composition further comprises at least one flame retardant **FR.**

The at least one flame retardant **FR** is preferably selected from the group consisting of magnesium hydroxide,

aluminum trihydroxide, antimony trioxide, ammonium polyphosphate, and melamine-, melamine resin-, melamine derivative-, melamine-formaldehyde-, silane-, siloxane-, and polystyrenecoated ammonium polyphosphates.

Other suitable flame retardants for use as the at least one flame retardant **FR** include, for example, 1,3,5-triazine compounds, such as melamine, melam, melem, melon, ammeline, ammelide, 2-ureidomelamine, acetoguanamine, benzoguanamine, diaminophenyltriazine, melamine salts and adducts, melamine cyanurate, melamine borate, melamine orthophosphate, melamine pyrophosphate, dimelamine pyrophosphate and melamine polyphosphate, oligomeric and polymeric 1,3,5-triazine compounds and polyphosphates of 1,3,5-triazine compounds, guanine, piperazine phosphate, piperazine polyphosphate, ethylene diamine phosphate, pentaerythritol, borophosphate, 1,3,5-trihydroxyethylisocyanaurate, 1,3,5-triglycidylisocyanaurate, triallylisocyanurate and derivatives of the aforementioned compounds.

Suitable flame retardants are commercially available, for example, under the trade names of Martinal® and Magnifin® (both from Albemarle) and under the trade names of Exolit® (from Clariant), Phos-Check® (from Phos-Check) and FR CROS® (from Budenheim).

According to one or more embodiments, the at least one flame retardant **FR** comprises 1 - 40 wt.-%, preferably 5 - 35 wt.-%, more preferably 10 - 35 wt.-%, even more preferably 10 - 30 wt.-%, of the total weight of the thermoplastic composition.

The thermoplastic composition may further comprise at least one UV-stabilizer, preferably at least one hindered amine light stabilizer (HALS). These types of compounds are typically added to polymer blends to prevent light-induced polymer degradation. Such UV-stabilizers are needed especially in case shaped articles obtained by using the thermoplastic composition are used in outdoor applications, for example, for waterproofing of roof structures and for waterproofing of construction gaps in building facades, for example gaps between a building structure and window or curtain wall components.

According to one or more embodiments, the thermoplastic composition comprises 0.05 - 10 wt.-%, preferably 0.1 - 5 wt.-%, more preferably 0.25 - 2.5 wt.-%, even more preferably 0.25 - 1.5 wt.-%, based on the total weight of the thermoplastic composition, of at least one hindered amine light stabilizer (HALS).

Suitable commercially available hindered amine light stabilizers include, for example, alkoxyamine hindered amine light stabilizers (NOR-HALS), such as:

bis-(1-octyloxy-2,2,6,6-tetramethyl-4-piperidinyl) sebacate, commercially available, for example, as Tinuvin® NOR 123 (from Ciba Chemicals, CAS number 129757-67-1); derivatives of N-butyl-2,2,6,6-tetramethyl-4-piperidinamine, commercially available, for example, as Tinuvin® NOR 152 (from Ciba Chemicals); reaction products with 3-bromo-1-propene, n-butyl-1-butanamine and N-butyl-2,2,6,6-tetramethyl-4-piperidinamine, oxidised, hydrogenated, commercially available, for example, as Tinuvin NOR® 371 (from Ciba Chemicals); reaction products of N,N'-ethane-1,2-diylbis(1,3-propanediamine), cyclohexane, peroxidized 4-butylamino-2,2,6,6-tetramethylpiperidine and 2,4,6-trichloro-1,3,5-triazine, commercially available as Flamestab NOR 116 (from BASF) ; and Hostavin NOW ex (from Clariant).

The thermoplastic composition may further comprise at least one UV-absorber, preferably selected the group consisting of hydroxybenzophenones, hydroxybenzotriazoles, triazines, anilides, benzoates, cyanoacrylates, phenylformamidines, and mixtures thereof. According to one or more embodiments, the thermoplastic composition comprises 0.05 - 10 wt.-%, preferably 0.1 - 5 wt.-%, more preferably 0.25 - 2.5 wt.-%, even more preferably 0.25 - 1.5 wt.-%, based on the total weight of the thermoplastic composition, of at least one UV-absorber, preferably selected from the group consisting of of hydroxybenzophenones, hydroxybenzotriazoles, triazines, anilides, benzoates, cyanoacrylates, phenylformamidines.

Suitable UV-absorbers are commercially available, for example, under the trade name of Tinuvin® (from Ciba Specialty Chemicals), such as Tinuvin ® 213, 234, 320, 326-329, 350, 360, 571.

The preferences given above for the thermoplastic polymer component **TP,** the at least one elastomer **E,** the at least one solid particulate filler **F,** and the at least one flame retardant **FR** apply equally apply equally to all subjects of the present invention unless otherwise stated.

Another subject of the present invention is a sealing device comprising a waterproofing layer obtained by using the thermoplastic composition of the present invention.

The term "layer" refers in the present disclosure generally to a sheet-like element having first and second major surfaces, i.e. top and bottom surfaces, a width defined between longitudinally extending edges, and a thickness defined between the first and second major surfaces. Preferably, a sheet-like element has a length and width of at least 15 times, preferably at least 25 times, more preferably at least 50 times greater than the thickness of the element.

Preferably, the waterproofing layer has a thickness of not more than 10 mm, preferably not more than 5 mm, more preferably not more than 3.5 mm, even more preferably not more than 2.5 mm, still more preferably not more than 2 mm. According to one or more embodiments, the waterproofing layer has a thickness of 0.05 - 5 mm, preferably 0.1 - 3.5 mm, more preferably 0.25 - 3 mm, even more preferably 0.25 - 2.5 mm, still more preferably 0.3 - 2.5 mm, most preferably 0.3 - 1.5 mm. The thickness of layer can be determined by using the measurement method as defined in DIN EN 1849-2:2010-04 standard. According to one or more further embodiments, the waterproofing layer has a thickness of 15 - 1000 $\mu$m, preferably 25 - 500 $\mu$m, more preferably 35 - 250 $\mu$m, even more preferably 50 - 150 $\mu$m.

There are no strict limitations for the width and length of the waterproofing layer, and these depend on the intended use of the sealing device. For example, the sealing device can be provided in form of a narrow strip, wherein the waterproofing layer has a width, for example, in the range of 25 - 500 mm, such as 50 - 400 mm, particularly 75 - 350 mm. The term "width" and "length" refer to the two perpendicular dimensions measured in the horizontal plane of the first and second major surfaces of a sheet-like element. Generally, the "width" of a sheet like element is the smaller of the horizontal dimensions of a sheet-like element. Consequently, the "width" of the waterproofing layer refers to the minor dimension measured in the horizontal plane of the waterproofing layer in a direction perpendicular to the length of the waterproofing layer. The sealing device can also be provided in form of a broad sheet, wherein the waterproofing layer has a width of, for example, in the range of 0.75 - 5 m, such as 0.85 - 3.5 m, particularly 1 - 2.5 m. The sealing device of the present invention is typically delivered to a construction site in form of a roll, transferred to the place of installation, and adhered to the substrate to be waterproofed.

Preferably, the waterproofing layer has a width of 25 - 5000 mm, preferably 35 - 3500 mm, more preferably 55 - 2500 mm, even more preferably 75 - 2000 mm, still more preferably 100 - 1500 mm. According to one or more embodiments, the waterproofing layer has a width in the range of 25 - 750 mm, preferably 50 - 500 mm, more preferably 75 - 500 mm, even more preferably 100 - 500 mm, still more preferably 100 - 350 mm. According to one or more embodiments, the waterproofing layer has a width in the range of 0.5 - 5 m, preferably 0.75 - 3.5 m, more preferably 0.85 - 2.5 m, even more preferably 1 - 2 m.

One of the advantages of the thermoplastic composition of the present invention is that shaped articles obtained by using the composition show low blocking behavior, which enables unproblematic post-processing, such as cutting, stacking, and unwinding from a roll of the shaped articles.

Preferably, the waterproofing layer of the sealing device exhibits a blocking value, determined by means of the method cited in the description, of not more than 50 N/15 mm, preferably not more than 40 N/15 mm, most preferably not more than 30 N/15 mm. In the context of the present invention, the term "blocking value" refers to the peeling force, which is required to separate two layers composed of the same material from each other, and which is determined by using the measurement method as described below.

Measurement of the blocking value

The blocking value of a layer is determined based on the measurement method as defined in DIN 53366 standard. The measurement is conducted at a temperature of 23°C using a shearing mode instead of a peeling mode, i.e. the layers are separated from each other by using a shearing force. The blocking value is determined as force in N/15 mm width of layer required to separate the two layes from each other after the layers have been pressed together for a period of 48 hours at a temperature of 50°C using a pressure of 15 $kg/m^2$.

Another advantage of the thermoplastic composition of the present invention is that shaped articles obtained by using the thermoplastic composition exhibit a high flexibility, especially compared to State-of-the-Art TPO-materials. According to one or more embodiments, the waterproofing layer of the sealing device has a storage modulus measured at a temperature of 0°C by dynamical mechanical analysis (DMA) of not more than 50 MPa, preferably not more than 40 MPa, more preferably not more than 35 MPa, even more preferably not more than 30 MPa. The storage modulus is preferably determined by dynamical mechanical analysis (DMA) using a method based on ISO 6721-10:2015 standard and

- A deformation amplitude (gamma) of 0.1 to 1 %
- Linear frequency of 1 Hz
- Normal force of -0.2 N
- Temperature of -50 to +30 °C and
- Rate of temperature change of 2 °C per minute.

Still another advantage of the thermoplastic composition of the present invention is that shaped articles obtained by using the thermoplastic composition exhibit a relatively high tensile strength and elongation at break. According to one or more embodiments, the waterproofing layer of the sealing device has a tensile strength, measured in machine direction (MD) using the method as defined in EN 12311-2:2013 standard at a temperature of 23°C using a cross head speed of 500 mm/min, of at least 10 N/50 mm, preferably at least 12.5 N/50 mm, more preferably at least 15 N/50 mm and/or an elongation at break, measured in machine direction (MD) by using the method as defined in EN 12311-2:2013 standard at a temperature of 23°C using a cross head speed of 500 mm/min, of at least 300 %, preferably of at least 400%, more preferably at least 500%.

The waterproofing layer of the sealing device is preferably obtained by a process comprising melt-processing a starting composition comprising the constituents of the thermoplastic composition of the present invention. The term "melt-processing" refers in the present disclosure to a process, in which at least one molten polymeric component is intimately mixed with at least one other component, which may be another molten polymeric component or a solid component, such

as a filler or a catalyst, until a melt blend, i.e. a substantially homogeneously mixed mixture of the polymeric component(s) and the other constituents is obtained.

The melt processing of the starting composition can be conducted as a batch process using any conventional mixer, such as a Brabender, Banbury, or roll mixer or as continuous process using a continuous type mixer, preferably an extruder, such as a single screw or a twin-screw extruder or a planetary roller extruder.

The process by which the waterproofing layer is obtained preferably comprises a further step of melt-shaping of the melt-processed starting composition into a form of a shaped article. The melt-shaping step can be conducted by using various techniques known to those of skill in the art, such as, extruding, co-extruding, molding, thermoforming, film blowing, casting, or calendaring. A skilled person is familiar with melt-shaping techniques and is able to select the suitable alternative based on the thickness of the waterproofing layer. For example, waterproofing layers having a thickness of below 500 $\mu$m, such as of below 300 $\mu$m are preferably produced by a blown film extrusion or coextrusion process. In a blown film extrusion process, a molten polymer composition obtained from an extruder is forced through an upwards facing opening of a blown film extruder die, typically an upright cylinder with an annular opening similar to a pipe extrusion die.

According to one or more embodiments, the starting composition comprises, in addition to the constituents of the thermoplastic composition, at least one catalyst **CAT.** The at least one catalyst **CAT** may be present in the starting composition to catalyze chain extension and/or crosslinking and/or coupling reactions of the polymeric components, particularly of the at least one elastomer **E,** during and/or after the melt-processing step and/or melt-shaping steps.

The at least one catalyst **CAT,** if used, is preferably selected from the group consisting of metal oxides, metal salts of fatty acids and metal salts of boric acid, sulfur catalysts, phenol resin catalysts, fatty acids, and mixtures thereof.

Suitable metal oxide catalysts and metal salts of fatty acids include, for example, ZnO, CaO, MgO, $Al_2O_3$, CrO3, FeO, $Fe_2O_3$, and NiO and zinc salts of fatty acids having at least 6 carbon atoms. Suitable sulfur catalysts include powdered sulfur, precipitated sulfur, high dispersion sulfur, surface-treated sulfur, insoluble sulfur, dimorpholinedisulfide, alkylphenoldisulfide, and mixtures thereof. Suitable phenol resin catalysts include bromide of an alkylphenol resin or mixed catalysts containing stannous chloride, chloroprene, or another halogen donor and an alkylphenol resin, and mixtures thereof.

According to one or more embodiments, the at least one catalyst **CAT** is selected from the group consisting of ZnO, CaO, MgO, $Al_2O_3$, $CrO_3$, FeO, $Fe_2O_3$, and NiO, zinc salts of fatty acids having at least 6 carbon atoms, preferably at least 13 carbon atoms, zinc borate, and mixtures thereof.

The at least one catalyst **CAT** may also be used in combination with at least one accelerator selected from the group consisting of guanidine compounds, aldehyde amine compounds, aldehyde ammonium compounds, thiazole compounds, sulfonamide compounds, thiourea compounds, thiuram compounds, xanthane compounds, and dithiocarbamate compounds. Such accelerators may be present in the starting composition in a total amount of 0.1 - 5.0 phr (parts by weight per 100 parts by weight of the at least one elastomer **E**).

The at least one catalyst **CAT,** if used, is preferably present in the starting composition in an amount of not more than 10 wt.-%, more preferably not more than 7.5 wt.-%, even more preferably not more than 5 wt.-%, based on the total weight of the starting composition. It may be preferable that the at least one catalyst **CAT** comprises 0.01 - 5 % wt.-%, more preferably 0.05 - 2.5 wt.-%, even more preferably 0.1 - 1.5 wt.-%, most preferably 0.25 - 1 wt.-%, of the total weight of the starting composition. It is also possible that some portion of the at least one catalyst is not consumed in the reactions of the polymeric components during the melt-processing and shaping steps and that the at least catalyst is also present in the waterproofing layer. It is, however, preferred that the amount of the at least one catalyst **CAT** the waterproofing layer is significantly lower than in the starting composition. It may be preferable that the waterproofing layer comprises not more than 0.5 wt.-%, more preferably not more than 0.25 wt.-%, even more preferably not more than 0.15 wt.-%, still more preferably not more than 0.0.5 wt.-%, based on the total weight of the waterproofing layer, of the at least one catalyst **CAT.**

According to one or more embodiments, the at least one catalyst **CAT** is zinc oxide and the starting composition further comprises at least 0.05 wt.-%, preferably 0.1 - 0.5 wt.-%, based on the total weight of the starting composition, of at least one zinc salt of a fatty acid, preferably zinc stearate and/or at least 0.05 wt.-%, preferably 0.1 - 0.5 wt.-%, based on the total weight of the starting composition, of at least one saturated fatty acid having at least 6 carbon atoms, preferably at least 13 carbon atoms.

According to one or more embodiments, the at least one catalyst is zinc oxide and the starting composition further comprises at least 0.05 wt.-%, preferably 0.1 - 0.5 wt.-%, based on the total weight of the starting composition, of zinc stearate and/or at least 0.05 wt.-%, preferably 0.1 - 0.5 wt.-%, based on the total weight of the starting blend, of a fatty acid selected from the group consisting of stearic acid and montanic acid.

The preferences given above for the sealing device, the waterproofing layer, and the at least one catalyst **CAT** apply equally to all subjects of the present invention unless otherwise stated.

Another subject of the present invention is a method for producing a sealing device according to the present invention, the method comprising melt-processing a starting composition comprising the constituents of the thermoplastic composition. The melt processing of the starting composition can be conducted as a batch process using any conventional mixer, such as a Brabender, Banbury, or roll mixer or as continuous process using a continuous type mixer, preferably an

extruder, such as a single screw or a twin-screw extruder or a planetary roller extruder.

The method for producing a sealing device preferably comprises a further step of melt-shaping of the melt-processed starting composition into a form of a shaped article. The melt-shaping step can be conducted by using various techniques known to those of skill in the art, such as, extruding, co-extruding, molding, thermoforming, film blowing, casting, or calendaring.

According to one or more embodiments, the starting composition comprises, in addition to the constituents of the thermoplastic composition, at least one catalyst **CAT.** The at least one catalyst may be present in the starting composition to catalyze chain extension and/or crosslinking and/or coupling reactions of the polymeric components, particularly of the at least one elastomer **E,** during and/or after the melt-processing step. Suitable compounds for use as the at least one catalyst **CAT** have already been described above.

According to one or more embodiments, the at least one catalyst **CAT** is selected from the group consisting of metal oxides, metal salts of fatty acids and metal salts of boric acid, sulfur catalysts, phenol resin catalysts, fatty acids, and mixtures thereof.

According to one or more embodiments, the method for producing a sealing device comprises steps of:

i) Melt-processing the starting composition in an extruder to provide a melt-blend of the starting composition and
ii) Extruding said melt-blend through an extruder die.

Any conventional extruder may be used for conducting step i) of the method, such as, a ram extruder, single screw extruder, a twin-screw extruder, or a planetary roller extruder. Preferably, the extruder is a screw extruder, more preferably a twin-screw extruder comprising a barrel and a screw unit contained in the barrel. The screw unit of a conventional screw extruder is typically considered to comprise feed, transition, and metering sections. In the feed section the thermoplastic composition enters the channels of the rotating screw and is conveyed towards the transition section, in which the composition is compressed and melted. The composition should be fully melted when it leaves the transition section. The function of the metering section is to homogenize the melted composition and to allow it to be metered or pumped out at constant rate. The extruder die used for conducting step ii) of the method is preferably a flat die, consisting of manifold, approach, and lip regions.

The extruder barrel comprises a feed port through which the material to be extruded is fed to the extruder and an outlet port through which the material leaves the barrel. The outlet port is coupled with the die via a gate or adapter piece. A mixing device may be interposed between the barrel and the die. The feed port is generally connected with a hopper to which the material to be extruded is added. It is preferred that a screen pack and a breaker plate are positioned at the end of the barrel to avoid plugging in the nozzles. The extruder further comprises heating elements, cooling elements, temperature sensors and temperature control elements to provide temperature-controlled zones along the barrel, also known as barrel zones. The extruder may comprise, for example, from 3 to 8 barrel zones, preferably at least 5 barrel zones, by the use of which a temperature profile can be realized in the barrel.

The extrusion process may be conducted by using different temperature profiles, such as an increasing temperature profile where the temperature increases downstream the barrel, a decreasing temperature profile where the temperature decreases downstream the barrel, and a humped temperature profile where the temperature increases from the feed port toward a certain set point, for example toward the middle of the barrel.

The maximum temperature of the starting composition during melt processing in the screw section of the extruder, i.e. the temperature in at the end of the screw section, is preferably not less than 150°C, more preferably not less than 160°C, most preferably not less than 180°C. The maximum temperature of the starting composition during melt processing in the screw section of the extruder can be in the range of 150 - 250°C, for example 160 - 220°C, such as 180 - 200°C.

The thermoplastic component **TP,** the at least one elastomer **E,** and the at least one catalyst **CAT,** if used, may be fed to the extruder as individual streams, as a pre-mix, dry blend, or as a master batch.

The thermoplastic polymer component **TP** and the at least one elastomer E may be fed into the extruder through the feed port and the at least one catalyst, if used, may fed into the extruder through another port located downstream from the feed port. The term "downstream" designates in the present document the direction to the outlet port. The at least one elastomer **E** can also be mixed with the at least one catalyst, if used, to obtain a premix, which is then fed into the extruder through the feed port. The premixing can be carried out using a blending apparatus, which are known to a person skilled in the art. Preferably the premixing of the at least one elastomer **E** and the at least one catalyst **CAT** is preferably conducted at a temperature, which is above the melting point of the at least one elastomer **E** and below the activation temperature of the at least one catalyst **CAT,** i.e. temperature at which the chain extension and/or crosslinking/ and/or coupling reactions of the at least one elastomer **E** are initiated. Alternatively, the thermoplastic polymer component **TP** and the at least one elastomer **E** can be processed in a compounding extruder to pellets or granules, which are dry-blended with the at least one catalyst **CAT,** if used, and the resulting dry-blend is then fed into extruder though the feed port.

Another subject of the present invention is a method for waterproofing a substrate, the method comprising steps

of:

I) Providing a sealing device according to the present invention,
II) Applying a moisture curable adhesive composition **ADH** to at least a portion of a surface of the substrate and/or to at least a portion of a surface of the waterproofing layer,
III) Covering the surface of the substrate with the sealing device and preferably pressing the sealing device against the surface of the substrate such that the applied adhesive composition forms an interlayer between the sealing device and the substrate such that at least a portion of the opposing surfaces of the sealing device and the substrate are directly connected to each other via the interlayer,
IV) Curing the moisture curable adhesive composition with water, preferably with moisture from air.

The moisture curable adhesive composition **ADH** can be applied to the surface of the substrate and/or to the surface of the sealing device by using any conventional techniques, for example, by means of a roller, brush, or by pouring-out and further distributed by means, for example, of a roller, a scraper or a notched trowel. Pressing the sealing device against the surface of the substrate can be conducted, for example, by using a roller.

The adhesive composition **ADH** is cured with water, preferably with moisture from air. The adhesive composition **ADH** may further be cured by water that has been applied on the surface of the substrate to be waterproofed before the application of the adhesive and/or with water that has been applied after the application of the adhesive and before the application of the sealing device. For example, the water may be applied on the surface of the substrate by spraying or by brushing before the application of the adhesive composition **ADH** and/or to the surface of the adhesive film applied on the surface of the substrate.

According to one or more embodiments, the moisture curable adhesive composition **ADH** is applied onto a portion of a surface of the substrate in step II) of the method.

The substrate is preferably part of a building structure, such as a concrete, metal, or a wood substrate.

Another subject of the present invention is a method for sealing a gap between two substrates, the method comprising steps of:

I') Providing a sealing device of the present invention,
II') Applying a first adhesive bead of a moisture curable adhesive composition **ADH** to a surface of a first substrate,
III') Applying a second adhesive bead of the moisture curable adhesive composition **ADH** on a surface of a second substrate,
IV') Covering the first adhesive bead with one end portion of the sealing device and the second adhesive bead with the opposite end portion of the sealing device,
V') Pressing said end portions of the sealing device against the first and second substrates,
VI') Curing the moisture curable adhesive **ADH** with water, preferably with moisture from air.

The adhesive composition **ADH** can be applied to the surface of the first and second substrates by using any conventional techniques, for example, by means of a roller, brush, or by pouring-out and further distributed by means, for example, of a roller, a scraper or a notched trowel. Pressing the sealing device against the surface of the substrates can be conducted, for example, by using a roller.

According to one or more embodiments, the first substrate is a window frame and the second substrate is a wall construction.

Still another subject of the present invention is a method bonding of a first substrate **S1** and a second substrate **S2** to each other, the method comprising steps of:

I. Applying a moisture curable adhesive **ADH** onto a surface of at least one of the two substrates,
II. Joining the substrates to each other such that the applied adhesive forms an interlayer between the two substrates such that the opposing surfaces of the substrates are directly connected to each other via the interlayer, and
III. Curing the moisture curable adhesive with water.

wherein the first substrate **S1** and/or the second substrate **S2** has been obtained by using the thermoplastic composition of the present invention.

According to one or more embodiments, the first substrate **S1** has been obtained by using the thermoplastic composition of the present invention.

Suitable second substrates **S2** are include, for example

- glass, glass ceramic, concrete, mortar, brick, tile, gypsum and natural rocks such as limestone, granite or marble;
- metals and alloys such as aluminum, iron, steel and nonferrous metals, and also surface-finished metals and alloys

such as galvanized or chromed metals or surface coated metals, such as Kynar®- or Duranar®-coated alumium;
- leather, textiles, paper, wood, wood base materials bonded with resins (wood-resin composites), for example phenolic, melamine or epoxy resins, resin-textile composites and further polymer composites;
- plastics such as polyvinyl chloride (plasticized and non-plasticized PVC), acrylonitrile-butadiene-styrene copolymers (ABS), polycarbonate (PC), polyamide (PA), polyesters, poly(methyl methacrylate) (PMMA), epoxy resins, polyurethanes (PUR), polyoxymethylene (POM), ethylene/propylene/diene terpolymers (EPDM), and also fiber-reinforced plastics such as carbon fiber-reinforced plastics (CFP), glass fiber-reinforced plastics (GFP) and sheet molding compounds (SMC), where the plastics may have been surface-treated by means of plasma, corona or flames;
- coated substrates such as powder-coated metals or alloys;
- paints or varnishes, especially automotive topcoats;
- bituminous substrates such as bitumen, PE laminates with bituminous backside.

The second substrate **S2** is preferably selected from the group consisting of: glass, glass ceramic, concrete, mortar, brick, tile, gypsum, natural stone, metals and alloys, especially aluminum, textiles, wood, wood-resin composites, resin-textile composites, resin-, glass- or carbon-fiber composites, polyvinyl chloride (PVC), acrylonitrile-butadiene-styrene copolymers (ABS), polycarbonate (PC), polyamide (PA), polyesters, poly(methyl methacrylate) (PMMA), epoxy resins, paints, varnishes, coated substrates, and bitumen.

If required, the substrates **S1** and/or **S2** can be pretreated prior to the application of the composition, especially by chemical and/or physical cleaning methods, such as de-greasing or brushing, or by the application of an adhesion promoter, an adhesion promoter solution or a primer.

In general, it is not required to pre-treat the surfaces of the substrates prior to application of the adhesive composition **ADH,** in particular not by chemically reactive methods. The adhesive composition **ADH** shows an excellent adhesion profile on a large variety of unprimed, non-pretreated, and even uncleaned materials.

According to one or more embodiments, said first substrate **S1** is preferably not pre-treated by a chemically reactive primer, flame, oxofluorination, plasma, or corona pre-treatment prior to step I. of the method according to the present invention.

However, it may be advantageous to de-grease, clean, or brush the substrates **S1** and/or **S2** before applying the adhesive composition **ADH.** This is normally only required when the substrates are visibly dirty or layered with dust, but may be advantageous in any case, for example, to remove process oils or other surface contaminants. It is recommended to use an alcohol or mild solvent to de-grease the surfaces after mechanical removal of any particulate matter possibly present. With some substrates **S1** and/or **S2,** mechanical roughening, for example, by using a metal brush, may be advantageous, in particular when the surface is extremely smooth.

Moisture curable adhesive composition **ADH**

According to one or more preferred embodiments, the moisture curable adhesive composition **ADH** comprises at least one polymer **P** containing silane and/or isocyanate groups.

According to one or more embodiments, the moisture-curable adhesive composition **ADH** is an adhesive composition **ADH1** comprising:

- at least one polymer **P1** containing silane groups,
- 10 - 40 wt.-%, based on the total weight of the adhesive composition **ADH1,** of at least one polymeric plasticizer **PL,**
- 0.1 - 5 wt.-%, based on the total weight of the adhesive composition **ADH1,** of at least one monomeric or oligomeric amino-functional alkoxysilane **AS1,** and
- 0.1 - 5 wt.-%, based on the total weight of the adhesive composition **ADH1,** of at least one monomeric or oligomeric $C_3$-$C_{20}$-alkyl-functional alkoxysilane **AS2.**

The term "silane group" refers in the present disclosure to a silyl group which is bonded to an organic radical or to an organosiloxane radical and has one to three, especially two or three, hydrolyzable substituents on the silicon atom. Particularly useful hydrolyzable substituents are alkoxy radicals. These types of silane groups are also referred to as "alkoxysilane groups". Silane groups may also be in partly or fully hydrolyzed form, for example as silanols. Terms "hydroxysilane", "isocyanatosilane", "aminosilane" and "mercaptosilane" refer respectively to organoalkoxysilanes having one or more hydroxyl, isocyanato, amino or mercapto groups on the organic radical in addition to the silane group.

According to one or more embodiments, the at least one monomeric or oligomeric amino-functional alkoxysilane **AS1** has a nitrogen content of 4.5 - 14.5 wt.-%, preferably of 5 - 10 wt.-%, based on the total weight of the alkoxysilane **AS1.** Nitrogen content of an amino-functional alkoxysilane can be measured by the Kjeldahl method or the Dumas method, both which are known to the skilled person in the field of analytical chemistry. According to one or more embodiments, the at least one oligomeric amino-functional alkoxysilane **AS1** has a nitrogen content of 15 - 20 wt.-%, based on the total weight of

the alkoxysilane **AS1.** One advantage of the high nitrogen content, especially of the oligomeric amino-functional alkoxysilane **AS1,** is a faster adhesion build-up after application of the adhesive composition **ADH1.**

The at least one amino-functional alkoxysilane **AS1** may be monomeric or oligomeric. The oligomeric forms of alkoxysilane **AS1** are linear, branched, or cyclic oligomers, formed by the partial hydrolysis and condensation of monomeric amino-functional alkoxysilanes, and, in some embodiments, partially with other, not amino-functional alkoxysilanes, such as alkyl alkoxysilanes or tetraalkoxysilanes. One advantage of using oligomeric aminofunctional alkoxysilanes **AS1** is that lower VOC levels can be achieved when employing them in greater amounts compared to purely monomeric aminofunctional alkoxysilanes **AS1**.

Monomeric amino-functional alkoxysilanes that are suitable as alkoxysilane **AS1** or as precursor for the production of oligomeric alkoxysilane **AS1** are shown in formula (I),

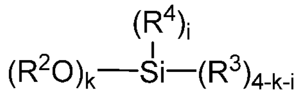

(I)

where

$R^2$ is a monovalent alkyl radical having 1 to 6 carbon atoms, preferably 1 or 2 carbon atoms, most preferably a methyl radical;
$R^3$ is a monovalent aminoalkyl radical selected from $-C_pH_{2p}-NH_2$, $-C_pH_{2p}-NH-R^5$, $-C_pH_{2p}-NH-C_dH_{2d}-NH_2$, $-C_pH_{2p}-NH-C_dH_{2d}-NH-C_eH_{2e}-NH_2$, $-C_pH_{2p}-NH-C_dH_{2d}-NH-R^5$, and $-C_pH_{2p}-NH-C_dH_{2d}-NH-CeH_{2e}-NH-R^5$;
$R^4$ is a monovalent linear, branched, or cyclic alkyl or arylalkyl radical having 1 to 12 carbon atoms, preferably 1 to 8 carbon atoms, most preferably a methyl radical;
$R^5$ is a monovalent linear, branched, or cyclic alkyl or arylalkyl radical having 1 to 12 carbon atoms, preferably 1 to 6 carbon atoms;
index i is an integer with a value of 0 or 1, preferably 0;
index k is an integer with a value of 2 or 3, with the provision that if i = 1 then k = 2;
index p is an integer with a value of 1 to 6;
indices d and e are independently integers with a value of 2 to 6.

Suitable oligomeric alkoxysilanes **AS1** are shown in formula (II) and (III), where formula (II) shows linear oligomers and formula (III) shows cyclic oligomers. It is possible to also use branched oligomers, at least in portions of a mixture of oligomers.

Suitable linear oligomers for use as oligomeric alkoxysilanes **AS1** are shown in formula (II),

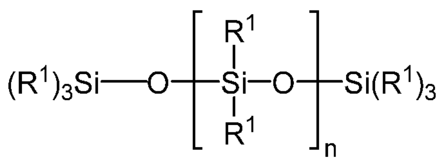

(II)

where

$R^1$ independently stands for

- an alkoxy radical with 1 to 6 carbon atoms, preferably 1 or two carbon atoms, more preferably a methoxy radical
- an $R^3$ as defined above, or
- an $R^4$ as defined above with the provision that the at least one of the $R^1$ in formula (II) stands for an $R^3$; and

index n is an integer with a value of 1 to 30.

Suitable cyclic oligomers for use as oligomeric alkoxysilanes **AS1** are shown in formula (III),

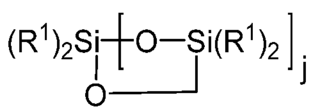

(III)

where

$R^1$ has the same meaning as above; and
Index j is an integer with a value of 3 to 30.

Suitable oligomeric amino-functional alkoxysilanes **AS1** and methods for producing them can be found in a published patent application WO 2014/079613 A1.

Preferred monomeric or oligomeric amino-functional alkoxysilanes **AS1** include N-(n-Butyl)-3-aminopropyltrimethoxysilane, 3-aminopropyltrimethoxysilane, 3-aminopropyldimethoxymethyl-silane, N-(2-aminoethyl)-3-aminopropyltrimethoxysilane, N-(2-aminoethyl)-3-aminopropyldimethoxymethylsilane, N-(2-aminoethyl)-N'-[3-(trimethoxysilyl)-propyl]ethylenediamine and oligomers obtained from the condensation of the mentioned aminosilanes, optionally oligomerized together with alkylalkoxysilanes, in particular methyltrimethoxysilane, ethyltrimethoxysilane, propyltrimethoxysilane, vinyltrimethoxysilane, n-butyltrimethoxysilane, isobutyltrimethoxysilane, phenyltrimethoxysilane, and octyltrimethoxysilane. Also preferred are monomeric or oligomeric or the analogs thereof with ethoxy in place of methoxy groups.

Most preferred monomeric or oligomeric amino-functional alkoxysilane **AS1** include N-(n-Butyl)-3-aminopropyltrimethoxysilane and the oligomers obtained from the condensation of N-(n-Butyl)-3-aminopropyltrimethoxysilane with or without alkylalkoxysilanes as mentioned above. Moisture curable adhesive compositions containing these amino-functional alkoxysilane silanes have been found out to exhibit a particularly low modulus and high movement capabilities after curing, which makes them especially suitable for use in the adhesive composition **ADH1.** According to one or more embodiments, the amino functional alkoxysilane **AS1** is the oligomer obtained from the condensation of N-(n-Butyl)-3-aminopropyltrimethoxysilane.

Preferably, said monomeric amino-functional alkoxysilane **AS1** has a viscosity of 2 - 40 mPa·s measured at 20°C according to DIN 53015 standard. This viscosity range of the monomeric amino-functional alkoxysilane **AS1** enables particularly good adhesion properties.

Preferably, said oligomeric amino-functional alkoxysilane **AS1** has a viscosity of 1500 - 3500 mPa·s measured at 20°C according to DIN 53015 standard. This viscosity range of the oligomeric amino functional alkoxysilane enables a particularly good miscibility with the polymer **P1** and particularly good adhesion properties.

In preferred embodiments, said monomeric or oligomeric amino functional alkoxysilane **AS1** comprises secondary amino groups. These embodiments have the advantage that the moisture curable adhesive compositions have a particularly low modulus and high movement capabilities after curing, which makes them especially suitable for use as the adhesive composition **ADH1** in the method according to the present invention.

Furthermore, the adhesive composition **ADH1** preferably comprises 0.1 - 5 wt.-%, preferably 1 - 4 wt.-%, more preferably 2 - 3 wt.-%, based on the total weight of the adhesive composition **ADH1,** of at least one monomeric or oligomeric $C_3$ - $C_{20}$-alkyl-functional alkoxysilane **AS2.**

Monomeric $C_3$ - $C_{20}$-alkyl-functional alkoxysilanes that are suitable as alkoxysilane **AS2** or as precursor for producing of oligomeric alkoxysilanes **AS2** are defined in formula (Ib),

$$(R^2O)_k{-}Si{-}(R^4)_{4-k} \qquad \text{(Ib)}$$

where

$R^2$ is a monovalent alkyl radical having 1 to 6 carbon atoms, preferably 1 or 2 carbon atoms, most preferably a methyl radical;
$R^4$ is a monovalent linear, branched, or cyclic alkyl or arakyl radical having 3 to 20 carbon atoms, preferably 5 to 16 carbon atoms, more preferably 6 to 12 carbon atoms, most preferably an octyl or isooctyl radical;
index k is an integer with a value of 2 or 3, preferably 3.

Oligomeric forms of silane **AS2** are represented by formula (II) and (III) as defined above, with the provision that $R^1$ independently stands for

- an alkoxy radical with 1 to 6 carbon atoms, preferably 1 or two carbon atoms, more preferably a methoxy radical; or
- an $R^4$ as defined above for formula (Ib);
- index n is an integer with a value of 1 to 30; and
- index j is an integer with a value of 3 to 30.

In preferred embodiments, said $C_3$ - $C_{20}$-alkyl-functional alkoxysilane **AS2** is comprised in the adhesive composition **ADH1** in an amount of at least 0.5 wt.-%, based on the total weight of the adhesive composition **ADH1** and/or said $C_3$ - $C_{20}$-alkyl-functional alkoxysilane **AS2** is a monomeric or an oligomeric $C_6$ - $C_8$-alkyl-functional alkoxysilane.

Furthermore, the adhesive composition **ADH1** comprises at least one polymer **P1** containing silane groups.

The polymer **P1** containing silane groups is preferably selected from organic polymers containing silane groups, as described more specifically hereinafter. An organic polymer containing silane groups has the advantage of having particularly good adhesion properties on a multitude of substrates and being particularly inexpensive.

The term "organic polymer" encompasses in the present disclosure a collective of macromolecules that are chemically homogeneous but differ in relation to degree of polymerization, molar mass and chain length, which has been prepared by a poly reaction (polymerization, polyaddition, polycondensation) and has a majority of carbon atoms in the polymer backbone, and reaction products of such a collective of macromolecules. Polymers having a polyorganosiloxane backbone (commonly referred to as "silicones") are not organic polymers in the context of the present document.

Preferably, the polymer **P1** comprises 10 - 40 wt.-%, preferably 12 - 35 wt.-%, more preferably 15 - 30 wt.-%, of the total weight of the adhesive composition **ADH1.** This range allows for good mechanical properties without making the adhesive composition too expensive.

Preferably, the polymer **P1** containing silane groups is an organic polymer containing silane groups, especially a polyurethane, polyolefin, polyester, polycarbonate, polyamide, poly(meth)acrylate, or polyether or a mixed form of these polymers, each of which bears one or preferably more than one silane group. The silane groups may be in pendant positions in the chain or in terminal positions and are bonded to the organic polymer via a carbon atom. More preferably, the organic polymer containing silane groups is selected from the group consisting of a polyolefin containing silane groups, a poly(meth)acrylate containing silane groups, a polyurethane containing silane groups, a polyether containing silane groups, and a mixed form of these polymers. Most preferably, the organic polymer containing silane groups is a polyether containing silane groups or a polyurethane containing silane groups or a poly(meth)acrylate containing silane groups or a mixture of these polymers.

The silane groups present in the organic polymer containing silane groups are preferably alkoxysilane groups, especially alkoxysilane groups of the formula (VI),

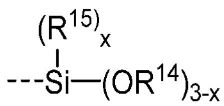

(VI)

where

$R^{14}$ is a linear or branched, monovalent hydrocarbyl radical having 1 to 5 carbon atoms, especially methyl or ethyl or isopropyl;
$R^{15}$ is a linear or branched, monovalent hydrocarbyl radical having 1 to 8 carbon atoms, especially methyl or ethyl; and
x is a value of 0 or 1 or 2, preferably 0 or 1, especially 0.

More preferably $R^{14}$ is methyl or ethyl.

For particular applications, the $R^{14}$ radical is preferably an ethyl group, since, in this case, ecologically and toxicologically harmless ethanol is released in the course of curing of the adhesive composition **ADH1.**

Preference is given to trimethoxysilane groups, dimethoxymethyl-silane groups or triethoxysilane groups. In this context, methoxysilane groups have the advantage that they are particularly reactive, and ethoxysilane groups have the advantage that they are toxicologically advantageous and particularly storagestable.

The organic polymer containing silane groups has an average of preferably 1.3 to 4, especially 1.5 to 3, more preferably 1.7 to 2.8, silane groups per molecule. The silane groups are preferably terminal.

The organic polymer containing silane groups preferably has an average molecular weight ($M_n$), determined by means of GPC against a polystyrene standard, in the range of 1000 - 30000 g/mol, more preferably 2000 - 20000 g/mol. The organic polymer containing silane groups preferably has a silane equivalent weight of 300 - 25000 g/eq, especially of 500 - 15000 g/eq.

The organic polymer containing silane groups may be solid or liquid at normal room temperature. It is preferably liquid at normal room temperature.

Most preferably, the organic polymer containing silane groups is an organic polymer containing silane groups which is liquid at normal room temperature, where the silane groups are especially dialkoxysilane groups and/or trialkoxysilane groups, more preferably trimethoxysilane groups or triethoxysilane groups.

Processes for preparing organic polymers containing silane groups are known to the person skilled in the art.

In a preferred process, organic polymers containing silane groups are obtained from the reaction of organic

polymers containing allyl groups with hydrosilanes, optionally with chain extension using, for example, diisocyanates.

In a further preferred process, polyethers containing silane groups are obtainable from the copolymerization of alkylene oxides and epoxysilanes, optionally with chain extension using, for example, diisocyanates.

In a further preferred process, organic polymers containing silane groups are obtainable from the reaction of organic polyols with isocyanatosilanes, optionally with chain extension using diisocyanates.

In a further preferred process, polyethers containing silane groups are obtainable from the reaction of organic polymers containing isocyanate groups, especially NCO-terminated urethane polymers from the reaction of polyols with a super stoichiometric amount of polyisocyanates, with aminosilanes, hydroxysilanes or mercaptosilanes. Polyethers containing silane groups from this process are particularly preferred. This process enables the use of a multitude of inexpensive starting materials of good commercial availability, by means of which it is possible to obtain different polymer properties, for example high extensibility, high strength, low modulus of elasticity, low glass transition point or high weathering resistance.

More preferably, the organic polymer containing silane groups is obtainable from the reaction of NCO-terminated polyurethane polymers with aminosilanes or hydroxysilanes. Suitable NCO-terminated polyurethane polymers are obtainable from the reaction of polyols, especially polyether polyols, particularly polyoxyalkylenediols or polyoxyalkylenetriols, preferably polyoxypropylenediols or polyoxypropylenetriols, with a superstoichiometric amount of polyisocyanates, especially diisocyanates. Other polyols, such as poly(meth)acrylate polyols, polyhydrocarbon polyols, in particular polybutadiene polyols, polyhydroxy functional fats or oils, polycarbonate polyols, polyester polyols and polyhydroxy functional acrylonitrilie/butadiene copolymers are also suitable. Furthermore, small amounts of low molecular weight dihydric or polyhydric alcohols, such as diols, glycols, and sugar alcohols may be used as additives.

Preferably, the reaction between the polyisocyanate and the polyol is conducted with exclusion of moisture at a temperature of 50°C to 160°C, optionally in the presence of suitable catalysts, with metered addition of the polyisocyanate in such a way that the isocyanate groups thereof are present in a stoichiometric excess in relation to the hydroxyl groups of the polyol. More particularly, the excess of polyisocyanate is chosen such that a content of free isocyanate groups of 0.1 - 5 wt.-%, preferably 0.2 - 4 wt.-%, more preferably 0.3 - 3 wt.-%, based on the overall polymer, remains in the resulting urethane polymer after the reaction of all hydroxyl groups.

Preferred diisocyanates are selected from the group consisting of hexamethylene 1,6-diisocyanate (HDI), 1-isocyanato-3,3,5-trimethyl-5-isocyanatomethylcyclohexane (= isophorone diisocyanate or IPDI), tolylene 2,4- and 2,6-diisocyanate and any desired mixtures of these isomers (TDI) and diphenylmethane 4,4'-, 2,4'- and 2,2'-diisocyanate and any desired mixtures of these isomers (MDI). Particular preference is given to IPDI or TDI. Most preferred is IPDI. In this way, polyurethane polymers containing silane groups with particularly good lightfastness are obtained.

Especially suitable as polyether polyols are polyoxyalkylenediols or polyoxyalkylenetriols having a degree of unsaturation lower than 0.02 meq/g, especially lower than 0.01 meq/g, and an average molecular weight ($M_n$) of 400 - 25000 g/mol, especially 1000 - 20000 g/mol. As well as polyether polyols, it is also possible to use portions of other polyols, especially polyacrylate polyols, and low molecular weight diols or triols.

Suitable aminosilanes for the reaction with an NCO-terminated urethane polyether are primary and secondary aminosilanes. Preference is given to 3-aminopropyltrimethoxysilane, 3-aminopropyldimethoxymethylsilane, 4-aminobutyltrimethoxysilane, 4-amino-3-methylbutyltrimethoxysilane, 4-amino-3,3-dimethylbutyltrimethoxysilane, N-butyl-3-aminopropyltrimethoxysilane, N-phenyl-3-aminopropyltrimethoxysilane, adducts formed from primary aminosilanes such as 3-aminopropyltrimethoxysilane, 3-aminopropyldimethoxymethylsilane or N-(2-aminoethyl)-3-aminopropyltrimethoxysilane and Michael acceptors such as acrylonitrile, (meth)acrylic esters, (meth)acrylamides, maleic or fumaric diesters, citraconic diesters or itaconic diesters, especially dimethyl or diethyl N-(3-trimethoxysilylpropyl)aminosuccinate. Likewise, suitable are analogs of the aminosilanes mentioned with ethoxy or isopropoxy groups in place of the methoxy groups on the silicon.

Suitable hydroxysilanes for the reaction with an NCO-terminated urethane polyether are especially obtainable from the addition of aminosilanes onto lactones or onto cyclic carbonates or onto lactides.

Aminosilanes suitable for the purpose are especially 3-aminopropyltrimethoxysilane, 3-aminopropyltriethoxysilane, 4-aminobutyltrimethoxysilane, 4-aminobutyltriethoxysilane, 4-amino-3-methylbutyltrimethoxysilane, 4-amino-3-methylbutyltriethoxysilane, 4-amino-3,3-dimethylbutyltrimethoxysilane, 4-amino-3,3-dimethylbutyltriethoxysilane, 2-aminoethyltrimethoxysilane or 2-aminoethyltriethoxysilane. Particular preference is given to 3-aminopropyltrimethoxysilane, 3-aminopropyltriethoxysilane, 4-amino-3,3-dimethylbutyl-trimethoxysilane or 4-amino-3,3-dimethylbutyltriethoxysilane.

Suitable lactones are especially γ-valerolactone, γ-octalactone, δ-decalactone, and ε-decalactone, especially γ-valerolactone.

Suitable cyclic carbonates are especially 4,5-dimethyl-1,3-dioxolan-2-one, 4,4-dimethyl-1,3-dioxolan-2-one, 4-ethyl-1,3-dioxolan-2-one, 4-methyl-1,3-dioxolan-2-one or 4-(phenoxymethyl)-1,3-dioxolan-2-one.

Suitable lactides are especially 1,4-dioxane-2,5-dione (lactide formed from 2-hydroxyacetic acid, also called "glycolide"), 3,6-dimethyl-1,4-dioxane-2,5-dione (lactide formed from lactic acid, also called "lactide") and 3,6-diphenyl-1,4-dioxane-2,5-dione (lactide formed from mandelic acid).

Preferred hydroxysilanes which are obtained in this way are N-(3-triethoxysilylpropyl)-2-hydroxypropanamide, N-(3-trimethoxysilylpropyl)-2-hydroxypropanamide, N-(3-triethoxysilylpropyl)-4-hydroxypentanamide, N-(3-triethoxysilylpropyl)-4-hydroxyoctanamide, N-(3-triethoxysilylpropyl)-5-hydroxydecanamide and N-(3-triethoxysilylpropyl)-2-hydroxypropyl carbamate.

In addition, suitable hydroxysilanes are also obtainable from the addition of aminosilanes onto epoxides or from the addition of amines onto epoxysilanes. Preferred hydroxysilanes which are obtained in this way are 2-morpholino-4(5)-(2-trimethoxysilylethyl)cyclohexan-1-ol, 2-morpholino-4(5)-(2-triethoxysilyl-ethyl)cyclohexan-1-ol or 1-morpholino-3-(3-(triethoxysilyl)propoxy)propan-2-ol.

Further suitable polyethers containing silane groups are commercially available products, especially the following: MS Polymer® (from Kaneka Corp.; especially the S203H, S303H, S227, S810, MA903 and S943 products); MS Polymer® or Silyl® (from Kaneka Corp.; especially the SAT010, SAT030, SAT200, SAX350, SAX400, SAX725, MAX602, MAX450, MAX951 products); Excestar® (from Asahi Glass Co. Ltd.; especially the S2410, S2420, S3430, S3630 products); SPUR+* (from Momentive Performance Materials; especially the 1010LM, 1015LM, 1050MM products); Vorasil® (from Dow Chemical Co.; especially the 602 and 604 products); Desmoseal® (from Bayer MaterialScience AG; especially the S XP 2458, S XP 2636, S XP 2749, S XP 2774 and S XP 2821 products), TEGOPAC® (from Evonik Industries AG; especially the Seal 100, Bond 150, Bond 250 products), Polymer ST (from Hanse Chemie AG/Evonik Industries AG, especially the 47, 48, 61, 61LV, 77, 80, 81 products); Geniosil® STP (from Wacker Chemie AG; especially the E10, E15, E30, E35, WP1, and WP2 products).

Particularly preferred organic polymers containing silane groups have end groups of the formula (VII)

$$---T-R^{16}-\overset{(R^{15})_x}{\overset{|}{Si}}-(OR^{14})_{3-x} \qquad \text{(VII)}$$

where

$R^{16}$ is a linear or branched divalent hydrocarbyl radical which has 1 to 12 carbon atoms and optionally has cyclic and/or aromatic moieties and optionally one or more heteroatoms, especially one or more nitrogen atoms;
T is a divalent radical selected from -O-, -S-, -N($R^{17}$)-, -O-CO-N($R^{17}$)-, -N($R^{17}$)-CO-O- and -N($R^{17}$)-CO-N($R^{17}$)-, where $R^{17}$ is a hydrogen radical or a linear or branched hydrocarbyl radical which has 1 to 20 carbon atoms and optionally has cyclic moieties, and which optionally has an alkoxysilane, ether or carboxylic ester group; and
$R^{14}$, $R^{15}$ and x have the definitions already given.

Preferably, $R^{16}$ is 1,3-propylene or 1,4-butylene, where butylene may be substituted by one or two methyl groups.

More preferably, $R^{16}$ is 1,3-propylene.

The adhesive composition **ADH1** furthermore comprises 15 - 35 wt.-%, based on the total weight of the adhesive composition, of at least one polymeric plasticizer **PL.** The term "polymeric plasticizer" refers in the present disclosure to a polymeric additive that is liquid at normal room temperature and contains no hydrolyzable silane groups. In contrast to traditional plasticizers, such as phthalates, the polymeric plasticizers generally have a higher molecular weight. Generally, polymeric plasticizers have the advantage that they have a lower tendency to migrate into substrates, compared to traditional, small molecule plasticizers, and therefore, they are less prone to be washed out into the environment.

Preferably, the polymeric plasticizer **PL** is comprised in an amount of 20 - 30 wt.-%, based on the total weight of the adhesive composition **ADH1.** Preferably, the polymeric plasticizer **PL** has an average molecular weight ($M_n$) of 500 - 12000 g/mol, more preferably 1000 - 10000 g/mol, even more preferably 2500 - 5000 g/mol.

Suitable polymeric plasticizers **PL** include polyols, such as those suitable for producing the organic polymers **P1** mentioned there, as long as they are liquid at normal room temperature. Preferred polyols suitable as polymeric plasticizers **PL** include polyether polyols, polyester polyols, polyhydrocarbon polyols, polybutadiene polyols, and poly(meth)acrylate polyols. Particularly preferred are polyether polyols, especially those having an average molecular weight ($M_n$) of 500 - 12000 g/mol, especially 1000 - 10000 g/mol, more preferably 2500 - 5000 g/mol. Such polyols are especially suitable in combination with organic polymers **P1.** Major advantages of using polyether polyols as polymeric plasticizer **PL** are an especially fast adhesion build-up and especially good adhesion properties.

According to one or more embodiments, said polymeric plasticizer **PL** is a polyether having end groups independently selected from alkyl, alkoxy, hydroxyl, amino groups, or end-capped hydroxyl groups. According to one or more embodiments, said plasticizer **PL** is a polyether polyol, i.e. a polyether having hydroxyl groups. According to one or more further embodiments, said polymeric plasticizer **PL** is a polyether having blocked hydroxyl groups, which is free of isocyanate groups. The hydroxyl groups of the polyether are preferably blocked in such a way that it does not undergo any chemical reactions before and during the curing of the adhesive composition **ADH1,** i.e. the polyether remains unchanged

in the cured adhesive composition. Blocked hydroxyl groups have the advantage that the plasticizer cannot react with the reactive polymers contained in the composition, for example with alkoxysilane groups in transesterification reactions. Consequently, blocked hydroxyl groups improve storage stability of the adhesive composition.

The polyether with blocked hydroxyl groups is preferably liquid at room temperature and preferably has a viscosity at 20°C in the range of 30 - 5000 mPa·s, preferably 40 -2000 mPa·s, even more preferably 50 - 1000 mPa·s, such as 50 - 500 mPa·s. The viscosity can be determined by using a cone-plate viscometer with a cone diameter of 25 mm, cone angle 1°, cone-tip-plate distance of 0.05 mm at a shear rate of 10 $s^{-1}$.

The blocked hydroxyl groups are preferably selected from ester, acetoester, carbonate, acetal and urethane groups. Ester, acetoester, carbonate or urethane groups are preferred. Hydroxyl groups are particularly easy to convert to these groups, and they are particularly stable and compatible with polyether urethane polymers. Ester, carbonate or urethane groups are particularly preferred, particularly ester or urethane groups. Most preferred are ester groups, especially acetate groups. These enable a particularly low viscosity and are easily accessible.

An ester group, especially an ester group having 1 to 8 carbon atoms, particularly an acetate group or benzoate group, is particularly preferred. These are particularly easy to manufacture. An acetate group is most preferred. A polyether with blocked hydroxyl groups in the form of acetate groups is particularly low-viscosity, very easy to manufacture and particularly inexpensive. A urethane group, particularly a phenyl urethane group or a p-toluenesulfonyl urethane group, is also preferred. A polyether with such blocked hydroxyl groups has a manageable viscosity and is particularly easy to produce.

The polyether with blocked hydroxyl groups preferably has 1,2-ethyleneoxy, 1, 2-propyleneoxy, 1,3-propyleneoxy, 1,2-butyleneoxy or 1,4-butyleneoxy groups, particularly 1,2-ethyleneoxy or 2-propyleneoxy groups. Preferably, at least 70 %, in particular at least 80 %, of the repeating units of the polyether consist of 1,2-propyleneoxy groups and optionally at most 30%, particularly at most 20%, of the repeating units consists of 1,2-ethyleneoxy groups. Particularly preferably, the repeating units of the polyether consist 100 % of 1,2-propyleneoxy groups. This enables providing the adhesive composition **ADH1** with particularly good resistance to hydrolysis.

According to one or more preferred embodiments, said moisture-curable adhesive composition **ADH1** does not contain any further plasticizers other than the polymeric plasticizer **PL.** In particular, the composition most preferably does not comprise any phthalates as plasticizers. Such compositions without any further plasticizers are toxicologically and environmentally advantageous and have fewer problems with migration effects.

The adhesive composition **ADH1** may further comprise catalysts, especially for the crosslinking of silane groups. Suitable further catalysts are especially metal compounds and/or basic nitrogen or phosphorus compounds.

Suitable metal compounds are especially compounds of tin, titanium, zirconium, aluminum or zinc, especially diorganotin(IV) compounds such as, in particular, dibutyltin(IV) diacetate, dibutyltin(IV) dilaurate, dibutyltin(IV) dineodecanoate or dibutyltin(IV) bis(acetylacetonate) and dioctyltin(IV) dilaurate, and also titanium(IV) or zirconium(IV) or aluminum(III) or zinc(II) complexes, especially with alkoxy, carboxylate, 1,3-diketonate, 1,3-ketoesterate or 1,3-ketoamidate ligands.

Suitable basic nitrogen or phosphorus compounds are especially imidazoles, pyridines, phosphazene bases or preferably amines, hexahydrotriazines, biguanides, guanidines or further amidines.

In addition, the adhesive composition **ADH1** may comprise, as a co-catalyst, an acid, especially a carboxylic acid. Preference is given to aliphatic carboxylic acids such as formic acid, lauric acid, stearic acid, isostearic acid, oleic acid, 2-ethyl-2,5-dimethylcaproic acid, 2-ethylhexanoic acid, neodecanoic acid, fatty acid mixtures from the hydrolysis of natural fats and oils or di- and polycarboxylic acids, especially poly(meth)acrylic acids.

In a preferred embodiment, the adhesive composition **ADH1** is essentially free of organotin compounds. Organotin-free compositions are advantageous in terms of protection of health and protection of the environment. According to one or more preferred embodiments, the tin content of the adhesive composition **ADH1** is less than 0.1 wt.-%, especially less than 0.05 wt.-%. These embodiments are especially beneficial to consumers due to low levels of potentially harmful organotin compounds.

In one embodiment, the adhesive composition **ADH1** additionally comprises, in addition to the catalyst described above, at least one organotitanate. A combination of the catalyst and an organotitanate has particularly high catalytic activity. This enables rapid curing of the adhesive composition by using a comparatively small amount of the organotitanate. Suitable organotitanates are especially titanium(IV) complexes.

The adhesive composition **ADH1** may comprise further constituents, especially the following auxiliary constituents:

- adhesion promoters and/or crosslinkers, especially further aminosilanes, mercaptosilanes, epoxysilanes, (meth) acryloylsilanes, anhydridosilanes, carbamatosilanes, alkylsilanes or iminosilanes, oligomeric forms of these silanes, adducts formed from primary aminosilanes with epoxysilanes or (meth)acryloylsilanes or anhydridosilanes, amino-functional alkylsilsesquioxanes, 3-glycidoxypropyltrimethoxysilane, 3-glycidoxypropyltriethoxysilane or 3-ureidopropyltrimethoxysilane, or oligomeric forms of these silanes;

- desiccants or drying agents, especially tetraethoxysilane, vinyltrimethoxysilane, vinyltriethoxysilane or organoalkoxysilanes having a functional group in the α position to the silane group, especially N-(methyldimethoxysilylmethyl)-O-methylcarbamate, (methacryloyloxymethyl)silanes, methoxymethylsilanes, orthoformic esters, calcium oxide or molecular sieves, especially vinyltrimethoxysilane or vinyltriethoxysilane;
- additional plasticizers, especially reactive plasticizers, in the form of monofunctional organic polymers, i.e. those that are silane-reactive at one end, carboxylic esters such as phthalates, especially dioctyl phthalate, bis(2-ethylhexyl) phthalate, bis(3-propylheptyl) phthalate, diisononyl phthalate or diisodecyl phthalate, diesters of ortho-cyclohexanedicarboxylic acid, especially diisononyl 1,2-cyclohexanedicarboxylate, adipates, especially dioctyl adipate, bis(2-ethylhexyl) adipate, azelates, especially bis(2-ethylhexyl) azelate, sebacates, especially bis(2-ethylhexyl) sebacate or diisononyl sebacate, glycol ethers, glycol esters, organic phosphoric or sulfonic esters, sulfonamides, polybutenes, or fatty acid methyl or ethyl esters derived from natural fats or oils, also called "biodiesel";
- solvents;
- inorganic or organic fillers, especially natural, ground or precipitated calcium carbonates, optionally coated with fatty acids or fatty acid esters, especially stearic acid, baryte (heavy spar), talcs, quartz flours, quartz sand, dolomites, wollastonites, kaolins, calcined kaolins, mica (potassium aluminum silicate), molecular sieves, aluminum oxides, aluminum hydroxides, magnesium hydroxide, silicas including finely divided silicas from pyrolysis processes, industrially produced carbon blacks, graphite, metal powders such as aluminum, copper, iron, silver or steel, PVC powder or hollow spheres;
- fibers, especially glass fibers, carbon fibers, metal fibers, ceramic fibers or polymer fibers such as polyamide fibers or polyethylene fibers;
- dyes;
- pigments, especially titanium dioxide or iron oxides;
- rheology modifiers, in particular thickeners or thixotropy additives, especially sheet silicates such as bentonites, derivatives of castor oil, hydrogenated castor oil, polyamides, polyurethanes, urea compounds, fumed silicas, cellulose ethers or hydrophobically modified polyoxyethylenes;
- stabilizers against oxidation, heat, light or UV radiation;
- natural resins, fats or oils such as rosin, shellac, linseed oil, castor oil or soya oil;
- non-reactive polymers that are preferably solid at normal room temperature such as, in particular, homo- or copolymers of unsaturated monomers, especially from the group comprising ethylene, propylene, butylene, isobutylene, isoprene, vinyl acetate or alkyl (meth)acrylates, especially polyethylenes (PE), polypropylenes (PP), polyisobutylenes (PIB), ethylenevinyl acetate copolymers (EVA) or amorphous poly-α-olefins (APAO);
- flame-retardant substances, especially the already mentioned fillers aluminum hydroxide and magnesium hydroxide, or, in particular, organic phosphoric esters such as, in particular, triethyl phosphate, tricresyl phosphate, triphenyl phosphate, diphenyl cresyl phosphate, isodecyl diphenyl phosphate, tris(1,3-dichloro-2-propyl) phosphate, tris(2-chloroethyl) phosphate, tris(2-ethylhexyl) phosphate, tris(chloroisopropyl) phosphate, tris(chloropropyl) phosphate, isopropylated triphenyl phosphate, mono-, bis- or tris(isopropylphenyl) phosphates of different degrees of isopropylation, resorcinol bis(diphenyl phosphate), bisphenol A bis(diphenyl phosphate) or ammonium polyphosphates;
- surface-active substances, especially wetting agents, leveling agents, deaerating agents or defoamers;
- biocides, especially algicides, fungicides or substances that inhibit fungal growth;

and other substances customarily used in curable compositions. It may be advisable to chemically or physically dry certain constituents before mixing them into the adhesive composition.

The adhesive composition **ADH1** preferably comprises 0.5 - 2.5 wt.-%, preferably 1 - 2 wt.-%, based on the total weight of the adhesive composition, of at least one desiccant or drying agent, most preferably vinyl trimethoxysilane. This range has the advantage that an optimal storage stability and skin formation time can be achieved without rendering the adhesive composition too stiff and/or brittle after curing.

According to one or more preferred embodiments, the adhesive composition **ADH1** comprises at least one desiccant and at least one adhesion promoter and/or crosslinker.

The adhesive composition **ADH1** can be provided in form of a one-component or of a multi-component, especially two-component, composition. In the present document, "one-component" refers to a composition in which all constituents of the composition are stored in a mixture in the same container. In the present document, "two-component" refers to a composition in which the constituents of the composition are present in two different components that are stored in separate containers. The two components are mixed with one another shortly before or during the application of the adhesive composition, whereupon the mixed composition cures, preferably under the influence of water, in particular atmospheric moisture.

According to one or more embodiments, the adhesive composition **ADH1** is a one-component moisture curable composition.

According to one or more further embodiments, the adhesive composition **ADH1** is a two-component composition consisting of two components **A1** and **A2,** wherein the first component **A1** comprises said polymer **P1** and the second component **A2** comprises water. Any second or optionally further components is/are mixed with the first component **A1** prior to or on application, especially by means of a static mixer or by means of a dynamic mixer.

The moisture-curable adhesive composition **ADH1** is especially applied at ambient temperature, preferably within a temperature range of 0 - 45°C, especially of 5 - 35°C, and cures under these conditions.

On application, the crosslinking reaction of the silane groups commences, if appropriate under the influence of moisture. Silane groups present can condense with silanol groups present to give siloxane groups (Si-O-Si groups). Silane groups present can also be hydrolyzed on contact with moisture to give silanol groups (Si-OH groups) and form siloxane groups (Si-O-Si groups) through subsequent condensation reactions. As a result of these reactions, the adhesive composition ultimately cures.

The water required for the curing can either come from the air (air humidity), or else the adhesive composition **ADH1** can be contacted with a water-containing component, for example by painting, for example with a smoothing agent, or by spraying, or water or a water-containing component can be added to the adhesive composition on application, for example in the form of a water-containing or water-releasing liquid or paste, as defined above as component **A2.** A paste is especially suitable if the adhesive composition **ADH1** itself is in the form of a paste.

In the case of curing by means of air humidity, the adhesive composition cures from the outside inward, at first forming a skin on the surface of the composition. What is called the "skin time" or "skin formation time" is a measure of the curing rate of the adhesive composition. The speed of curing is generally determined by various factors, for example the availability of water, temperature, etc.

For the intended application as adhesive in the inventive method, the moisture-curable adhesive composition **ADH1** preferably has a pasty consistency with structurally viscous properties. Such a pasty adhesive **ADH1** is especially applied to the substrate from standard cartridges that are operated manually, by means of compressed air or with a battery, or from a vat or hobbock by means of a delivery pump or an extruder.

Moisture-curable adhesive composition **ADH1** may also have liquid consistency at room temperature with self-leveling properties. It may be slightly thixotropic, such that the coating is applicable to sloping to vertical surfaces without flowing away immediately. In this form, moisture-curable adhesive composition **ADH1** is preferably applied by means of a roller or brush or by pouring-out and distributed by means, for example, of a roller, a scraper or a notched trowel.

According to one or more embodiments, the moisture-curable adhesive composition **ADH** is an adhesive composition **ADH2** comprising at least one polymer **P2** containing isocyanate groups.

Preferably, the polymer **P2** comprises 5 - 50 wt.-%, preferably 10 - 45 wt.-%, more preferably 15 - 40 wt.-%, of the total weight of the adhesive composition **ADH2.** This range allows for good mechanical properties without making the adhesive composition too expensive.

Preferably, the polymer **P2** containing isocyanate groups is an organic polymer containing isocyanate groups, especially a polyurethane, polyolefin, polyester, polycarbonate, polyamide, poly(meth)acrylate, or polyether or a mixed form of these polymers, each of which bears one or preferably more than one isocyanate group. The isocyanate groups may be in pendant positions in the chain or in terminal positions and are bonded to the organic polymer via a carbon atom.

Preferably, the polymer **P2** containing isocyanate groups has an average molecular weight ($M_n$), determined by means of GPC against a polystyrene standard, in the range of 500 - 50000 g/mol, more preferably 1000 - 30000 g/mol, even more preferably 1000 - 25000 g/mol, still more preferably 1000 - 20000 g/mol.

More preferably, the organic polymer containing isocyanate groups is an isocyanate group-containing polyurethane polymer. The term "polyurethane polymer" encompasses all polymers which are prepared by the so-called diisocyanate-polyaddition process, including those polymers which are almost or completely free of urethane groups. Examples of polyurethane polymers are polyether-polyurethanes, polyester-polyurethanes, polyether-polyureas, polyureas, polyester-polyureas, polyisocyanurates, and polycarbodiimides.

The isocyanate group-containing polyurethane polymer is preferably obtained by the reaction of at least one polyol with at least one polyisocyanate, wherein the ratio of the isocyanate groups (NCO) to hydroxyl groups (OH) is in the range of 1.8:1 to 10:1, preferably from 2:1 to 8:1, more preferably from 2:1 to 6:1. The isocyanate group-containing polyurethane polymer is prepared in a known manner. Preferably, the reaction between the polyisocyanate and the polyol is conducted with exclusion of moisture at a temperature of 20 - 160 °C, preferably 40 - 140 °C, optionally in the presence of suitable catalysts, with metered addition of the polyisocyanate in such a way that the isocyanate groups thereof are present in the specified stoichiometric excess in relation to the hydroxyl groups of the polyol.

Particularly suitable polyols include polyether polyols, polyester polyols, polycarbonate polyols, poly(meth) acrylate polyols, and hydrocarbon polyols, such as polybutadiene polyols, polyhydroxy functional fats and oils, and polyhydroxy functional acrylonitrilie/butadiene copolymers. Preferred polyether polyols are polyoxypropylene polyols and polyoxypropylene polyoxyethylene polyols, particularly the diols and triols.

Preferably, the at least one polyisocyanate is diisocyanate, more preferably monomeric disocyanate, preferably selected from the group consisting of aromatic and aliphatic monomeric diisocyanates, such as 4,4'-diphenylmethane diisocyanate, optionally with proportions of 2,4'- and / or 2,2'-diphenylmethane diisocyanate (MDI), 2,4-tolylene diisocyanate or mixtures with 2,6-tolylene diisocyanate (TDI), 1,4-phenylene diisocyanate (PDI), naphthalene-1,5-diisocyanate (NDI), 1,6-hexane diisocyanate (HDI), 2,2(4),4-trimethyl-1,6-hexamethylendiisocyanat (TMDI), cyclohexane-1, 3- or -1, 4-diisocyanate, 1-isocyanato-3,3,5-trimethyl-5-isocyanatomethylcyclohexane (isophorone diisocyanate or IPDI), perhydro-2,4'- or -4,4'-diphenylmethandiisocyanate (HMDI), 1,3- or 1,4-bis(isocyanato-methyl) cyclohexane, m- or p-xylylene diisocyanate (XDI), m-tetramethylxylylene diisocyanate (TMXDI ), or mixtures thereof.

It may be preferred that the excess of polyisocyanate in the reaction mixture is chosen such that the prepared isocyanate group-containing polyurethane polymer has an average NCO-functionality of 1.5 - 4, preferably 1.8 - 3.5. The term "average NCO-functionality" refers to the average number of isocyanate (NCO) groups per molecule determined by using the method as defined in ISO 14896-2009 standard method A.

According to one or more embodiments, the polymer **P2** containing isocyanate groups is low monomer isocyanate group containing polymer having a content of monomeric diisocyanates of not more than 1.0 wt.-%, preferably not more than 0.5 wt.-%, more preferably not more than 0.3 wt.-%, even more preferably not more than 0.2 wt.-%. The term "monomeric diisocyanate" refers here to an organic compound with two isocyanate groups that are separated by a divalent hydrocarbon radical with 4 to 15 carbon atoms. Such low monomer isocyanate group containing polymers have been found out to be suitable for providing moisture curable adhesive compositions, which have a monomeric diisocyanate content of less than 0.1% by weight. These are safe to use even without special protective measures and can therefore be sold in many countries without being labeled as harmful (Xn).

Low monomer isocyanate group containing polymers can be obtained from the reaction of at least one monomeric diisocyanate with at least one polyol in an NCO/OH ratio of at least 3:1 and subsequent removal of most of the monomeric diisocyanates by means of a suitable separation process, preferably distillation, such as thin film distillation or molecular distillation. Suitable low monomer isocyanate group containing polymers and methods for their preparation are disclosed in a published patent application WO 2020/030607 A1, on pages 7-14.

According to one or more embodiments, the polymer **P2** comprises at least one isocyanate group-containing polyether urethane polymer. The term "polyether urethane polymer" refers to a polymer that contains ether groups as repeating units and also contains urethane groups. Preferably, the at least one polyether urethane polymer is obtained by the reaction of at least one polyether polyol with at least one polyisocyanate, preferably at least one diiosocyanate.

According to one or more embodiments, the at least one polyether polyol has

- an average molecular weight ($M_n$) in the range of 1000 - 15000 g/mol, preferably 1500 - 12000 g/mol, more preferably 2000 - 8000 g/mol and/or
- hydroxyl number in the range of 8 - 112 mg KOH/g, preferably 10 - 75 mg KOH/g, more preferably 12 - 56 mg KOH/g and/or
- an average hydroxyl-functionality in the range of 1.3 - 4, preferably 1.5 - 3.5, more preferably 1.7 - 3 and/or
- a degree of unsaturation of less than 0.03 meq/g, preferably less than 0.02 meq/g, more preferably less than 0.01 meq/g.

Particularly suitable polyether polyols for the at least one isocyanate group-containing polyether urethane polymer include polyoxyalkylene diols and/ or polyoxyalkylene triols, especially the polymerization products of ethylene oxide or 1,2-propylene oxide or 1,2- or 2,3-butylene oxide or oxetane or tetrahydrofuran or mixtures thereof, which can be polymerized with using a starter molecule having two or three active hydrogen, in particular one, such as water, ammonia or a compound with several OH or NH groups, such as 1, 2-ethanediol, 1, 2- or 1, 3-propanediol, neopentyl glycol, diethylene glycol, triethylene glycol, the isomeric dipropylene glycols or tripropylene glycols, the isomeric butanediols, pentanediols, hexanediols, heptanediols, octanediols, nonanediols, decanediols, undecanediols, 1,3- or 1,4-cyclohexanedimethanol, bisphenol A, hydrogenated bisphenol A, 1,1,1-trimethylolethane, 1,1,1 trimethylolpropane, glycerol or aniline, or mixtures of the aforementioned compounds.

Polyoxypropylene diols, polyoxypropylene triols, or ethylene oxide-terminated polyoxypropylene diols or triols are particularly preferred. These are polyoxyethylene-polyoxypropylene mixed polyols, which are obtained, for example, by further alkoxylating polyoxypropylene diols or triols with ethylene oxide after the polypropoxylation reaction has ended and as a result ultimately having primary hydroxyl groups.

Preferred polyisocyanates for the preparation of the isocyanate group-containing polyether urethane polymer include the ones described above suitable for the preparation of the isocyanate group-containing polyurethane polymer.

According to one or more embodiments, the polymer **P2** comprises at least one first isocyanate group-containing polyether urethane polymer **P21** and at least one second isocyanate group-containing polyether urethane polymer **P22** different from the at least one first isocyanate group-containing polyether urethane polymer **P21,** wherein the polyether urethane polymer **P21** preferably comprises 45 - 95 wt.-%, preferably 55 - 85 wt.-%, more preferably 65 - 80 wt.-%, of the total weight of the polymer **P2** and/or the polyether urethan polymer **P22** preferably comprises 5 - 35 wt.-%, preferably 10 - 30 wt.-%, more preferably 15 - 25 wt.-%, of the total weight of the polymer **P2.**

According to one or more embodiments, the polymer **P2** further comprises at least one isocyanate group-containing polyurethane polymer **P23** obtained by the reaction of at least one polybutadiene polyol with at least one polyisocyanate, preferably at least one diisocyanate, wherein at least one isocyanate group-containing polyurethane polymer **P23** preferably comprises 0.1 - 10 wt.-%, preferably 0.5 - 7.5 wt.-%, more preferably 1 - 5 wt.-%, of the total weight of the polymer **P2**.

According to one or more embodiments, the adhesive composition **ADH2** further contains a latent hardener that hydrolyzes under the influence of moisture, preferably atmospheric moisture. Preferably, the latent hardener is a blocked amine, preferably having at least one aldimino group or oxazolidino group. These types of blocked amino groups together with isocyanate groups are particularly storage stable with the exclusion of moisture. Furthermore, adhesive compositions containing such latent hardeners have a lower tendency to form bubbles while curing. Suitable blocked amines to be used as the hardener and methods for their preparation are disclosed in a published patent application WO 2020030607 A1, on pages 15-25.

The blocked amine is preferably used in an amount such that the ratio of the number of blocked amino groups to the number of isocyanate groups present, is in the range from 0.1 to 1.1, more preferably 0.2 to 1.0, even more preferably from 0.3 to 0.9.

The adhesive composition **ADH2** may further contain at least one oligomeric polyisocyanate. The term "oligomer" designates a compound built up through the linkage of a few monomers, for example dimers, trimers, tetramers and other polymeric materials. Term "polyisocyanate oligomer" can designate an individual oligomer or a mixture of oligomers of diisocyanates, wherein these oligomers can be built up of identical or different diisocyanates. Oligomeric polyisocyanates can be present in the adhesive composition **ADH2** to improve the adhesion to various substrates.

Suitable oligomeric polyisocyanates include, particularly, HDI biurets such as Desmodur® N 100 or N 3200 (from Covestro), Tolonate® HDB or HDB-LV (from Vencorex) or Duranate® 24A-100 (from Asahi Kasei ); HDI isocyanurates such as Desmour® N 3300, N 3600 or N 3790 BA (all from Covestro), Tolonate® HDT, HDT-LV or HDT-LV2 (from Vencorex), Duranate® TPA-100 or THA-100 (from Asahi Kasei) or Coronate® HX (from Nippon Polyurethane); HDI uretdiones such as Desmodur® N 3400 (from Covestro); HDI iminooxadiazinediones such as Desmodur® XP 2410 (from Covestro); HDI allophanates such as Desmodur® VP LS 2102 (from Coevro); IPDI isocyanurates in solution, for example as Desmodur® Z 4470 (from Covestro), or in solid form, for example as Vestanat® T1890 / 100 (from Evonik); TDI oligomers such as Desmodur® IL (from Covestro); or mixed isocyanurates based on TDI / HDI such as Desmodur® HL (from Covestro).

The at least one oligomeric polyisocyanate may be present in the adhesive composition **ADH2** in an amount of at most 3.5 wt.-%, preferably at most 2.5 wt.-%, more preferably at most 1.5 wt.-%, such as 0.05 - 3.5 wt.-%, preferably 0.1 - 2.5 wt.-%, more preferably 0.1 - 1.5 wt.-%, based on the total weight of the adhesive composition **ADH2.**

The adhesive composition **ADH2** may further comprise at least one catalyst, especially for the acceleration of the reaction of isocyanate groups with water. Suitable catalysts include especially metal compounds and/or basic nitrogen or phosphorus compounds.

Suitable metal compounds are especially compounds of tin, titanium, zirconium, aluminum, zinc, bismuth, ruthenium, iron, and molybdenum compounds, especially diorganotin(IV) compounds such as, in particular, dibutyltin(IV) diacetate, dibutyltin(IV) dilaurate (DBTL), dibutyltin(IV) dineodecanoate, dibutyltin(IV) diacetylacetonate, dibutyltin(IV) bis(acetylacetonate), and dioctyltin(IV) dilaurate (DOTDL), and also titanium(IV) or zirconium(IV) or aluminum(III) or zinc(II) complexes, or bismuth(III) complexes, especially with alkoxy, carboxylate, 1,3-diketonate, 1,3-ketoesterate or 1,3-ketoamidate ligands, such as bismuthoctoate or bismuthneodecanoate, zincoctoate or zincneodecanoate, zirconiumoctoate or zirconiumneodecanoate.

Suitable basic nitrogen or phosphorus compounds are especially imidazoles, pyridines, phosphazene bases or amines, hexahydrotriazines, biguanides, guanidines or further amidines, such as dimorpholinodialkylethers, dimorpholino substituted polyalkylene glycols, and aliphatic, aromatic, and alkanol amines having at least one tertiary amino group, for example 2,2'-dimorpholinodiethyl ether, 1,4-diazabicyclo[2.2.2]-octane, N-(3-dimethylaminopropyl)-N,N-diisopropanolamine (DPA), dimethylaminopropyl dipropanolamine, triethylene triamine, dimethylethanolamine, and N,N',N'-trimethyl aminoethyl piperazine.

Combinations of two or more catalysts may also be used, preferred ones including combinations of one or more metal-catalysts with one or more basic nitrogen or phosphorus compounds.

According to one or more embodiments, the at least one catalyst comprises 0.005 - 0.5 wt.-%, preferably 0.01 - 0.25 wt.-%, more preferably 0.01 - 0.1 wt.-%, even more preferably 0.01 - 0.05 wt.-% of the total weight of the adhesive composition **ADH2.**

The adhesive composition **ADH2** may comprise further constituents, especially one or more of the auxiliary constituents described above as suitable for use in the adhesive composition **ADH1.**

According to one or more preferred embodiments, the adhesive composition **ADH2** further comprises one or more auxiliary constituents selected from the group consisting of desiccants, drying agents, inorganic or organic fillers, adhesion promoters, crosslinkers, non-reactive plasticizers, reactive plasticizers in solvents, and pigments. The total amount of these types of auxiliary constituents is preferably not more than 75 wt.-%, preferably not more than 65 wt.-%,

based on the total weight of the adhesive composition.

According to one or more embodiments, the adhesive composition **ADH2** comprises 0.5 - 35 wt.-%, preferably 1.5 - 30 wt.-%, more preferably 5 - 25 wt.-%, even more preferably 10 - 25 wt.-%, based on the total weight of the adhesive composition **ADH2,** of at least one plasticizer.

Suitable plasticizers for use in the adhesive composition **ADH2** include, for example, phthalates, especially dioctyl phthalate, bis(2-ethylhexyl) phthalate, bis(3-propylheptyl) phthalate, diisononyl phthalate or diisodecyl phthalate, diesters of ortho-cyclohexane-dicarboxylic acid, especially diisononyl 1,2-cyclohexanedicarboxylate, adipates, especially dioctyl adipate, bis(2-ethylhexyl) adipate, azelates, especially bis(2-ethylhexyl) azelate, sebacates, especially bis(2-ethylhexyl) sebacate or diisononyl sebacate, glycol ethers, glycol esters, organic phosphoric or sulfonic esters, sulfonamides, polybutenes, or fatty acid methyl or ethyl esters derived from natural fats or oils, also called "biodiesel".

According to one or more embodiments, the adhesive composition **ADH2** comprises 1.5 - 60 wt.-%, preferably 2.5 - 55 wt.-%, more preferably 5 - 50 wt.-%, even more preferably 10 - 45 wt.-%, based on the total weight of the adhesive composition **ADH2,** of at least one organic and/or inorganic filler.

According to one or more embodiments, the adhesive composition **ADH2** comprises 0.05 - 2 wt.-%, preferably 0.1 - 1 wt.-%, based on the total weight of the adhesive composition **ADH2,** of at least one desiccant and/or drying agent. This range has the advantage that an optimal storage stability without changing the properties of the adhesive composition **ADH2.**

According to one or more embodiments, the adhesive composition **ADH2** comprises 0.01 - 5 wt.-%, preferably 0.1 - 3.5 wt.-%, more preferably 0.25 - 2.5 wt.-%, even more preferably 0.35 - 1.5 wt.-%, , based on the total weight of the adhesive composition **ADH2,** of at least one organic solvent. The term "organic solvent" refers to an organic substance that is able of at least partially dissolving another substance. In particular, the term "organic solvent" refers to an organic solvent that is liquid at a temperature of 25°C.

Suitable organic solvents for use in the adhesive composition **ADH2** include, for example, aliphatic esters, aliphatic hydrocarbons, halogenated aliphatic hydrocarbons, aromatic hydrocarbons, aliphatic alcohols, aliphatic ketones and mixtures thereof. Aromatic hydrocarbons are particularly preferred. According to one or more embodiments, the at least one solvent is selected from the group consisting of pentane, hexane, heptane, octane, cyclohexene, cyclohexane, benzene, naphthalene, toluene, xylene, methanol, ethanol, isopropanol, acetone, ethyl acetate, methyl ethyl ketone, methyl isobutyl ketone, methyl n-butyl ketone, and tetrahydrofuran.

The adhesive composition **ADH2** can be provided in form of a one-component or of a multi-component, especially two-component, composition. Preferably, the adhesive composition **ADH2** is a one-component moisture curable composition.

**Examples**

The materials shown in Table 1 were used for preparing the membrane sheets.

Table 1

| **Material** | **Type/description** | **Provider** |
|---|---|---|
| Queo 0203 | Ethylene-octene copolymer, octene content of 20 wt.-%, MFI (190 °C/2.16 kg) 3 g/10 min (ISO 1133) | Borealis AG |
| Vistamaxx 6202 | Propylene-ethylene copolymer, ethylene content 15 wt.-%, MFR (190 °C/2.16 kg) 9 g/10 min (ASTM D 1238) | Exxon Mobil |
| Versify 3401 | Propylene-ethylene copolymer, ethylene content 15 wt.-%, MFR (230 °C/2.16 kg) 8 g/10 min (ASTM D 1238) | Dow Chemical Company |
| Versify 2300 | Propylene-ethylene copolymer, ethylene content 13 wt.-%, MFR (230 °C/2.16 kg) 2 g/10 min (ASTM D 1238) | Dow Chemical Company |
| Hifax CA 10 A | Reactor TPO (heterophasic propylene copolymer), MFR (230 °C/2.16 kg) 0.6 g/10 min (ASTM D1238), flexural modulus at 23 °C (ISO 178) 80 MPa | Lyondell Basell |
| Hifax CA 212 A | Reactor TPO (heterophasic propylene copolymer), MFR (230 °C/2.16 kg) 8 g/10 min (ASTM D1238), flexural modulus at 23 °C (ISO 178) 80 MPa | Lyondell Basell |
| BB2030 | Bromobutyl rubber, Mooney viscosity (ML 1+8, 125 °C) 32 MU | Lanxess |

(continued)

| Material | Type/description | Provider |
|---|---|---|
| Nordel IP 3270 | EPDM rubber, ethylene content 69 wt.-% (ASTM D3900), Mooney viscosity (ML 1+4, 125 °C) 20 MU | Dow Chemical Company |
| Omya EX-H1 | Calcium carbonate, $d_{50}$ median particle size 1 $\mu$m | Omya |
| Silox Actif E80 | Zinc oxide catalyst | Safic Alcan |

The inventive and reference membrane sheets were prepared from starting compositions according to the procedure as described below and tested for their bonding properties.

Preparation of membrane sheets

The membrane sheets were produced using a laboratory scale extrusion-calendering apparatus consisting of a twin-screw extruder (Berstorff GmbH), a flat die and set of water-cooled calender rolls.

In producing of the membrane sheets, the thermoplastic polymer component **TP** and the elastomers **E** were fed to the extruder hopper. The polymer blend was melt-processed in the first of the four zones of the extruder and an additive package containing a mixture of a catalyst, hindered amine light stabilizers (NOR-HALS), and flame retardants was added to the partially melt-processed blend at beginning of the second zone of the extruder. The melt-processed blend was then extruded through an extruder flat die into single ply membrane sheets having a thickness of approximately 0.6 mm. The extrusion was conducted using an extrusion temperature of ca. 165°C and pressure of ca. 120 bar.

The constituents of the starting composition and their amounts fed into the extruder during the preparation of the membrane sheets are shown in Table 3.

The membrane sheet used in reference example Ref-1 is an EPDM-based waterproofing membrane sheet, which is commercially available under the trade name of SikaMembrane® Universal (from Sika Schweiz AG).

Preparation of the moisture-curable adhesive **ADH1**

A moisture-curable adhesive **ADH1** was prepared using the materials shown in Table 2.

Table 2

| Material | Type/description | Provider | Amount in ADH1, [wt.-%] |
|---|---|---|---|
| Polymer STP-1 | Polymer **P1** (based on polyether-polyurethane) | Preparation detailed below | 15.9 |
| Plasticizer PL-a | Plasticizer **PL** (Acclaim® Polyol 4200); average molecular weight ($M_n$) approx. 4000 g/mol | Covestro | 22 |
| A1110 | Amino-functional alkoxysilane **AS1** (3-Aminopropyl trimethoxysilane) | Momentive | 1 |
| OCTMO | Alkyl-functional alkoxysilane **AS2** (Octyltrimethoxysilane) | Evonik | 3 |
| VTMO | Drying agent (Vinyltrimethoxysilane) | Evonik | 2 |
| Thixotropy additive | Modified castor oil (Thixatrol® ST) | Elementis | 4 |
| PCC (Filler) | Surface-treated, precipitated $CaCO_3$ (Socal® U1S2) | Solvay | 15 |
| GCC (Filler) | Natural, ground chalk (Omyacarb® 5-GU) | Omya | 37 |
| Catalyst | Dibutyltin dilaurate (Fascat® 4202) | PMC Organometallix | 0.1 |

For preparing the adhesive composition **ADH1** as detailed in Table 2, the polymer **P1,** the plasticizer, drying agent, and the thixotropy additive were thoroughly mixed for 5 minutes. Subsequently, the dried fillers were added with

kneading during 15 minutes at temperature of 60°C. With the heater switched off, the alkoxysilanes **AS1** and **AS2** and catalyst were added, and the compositions were subsequently processed to a homogeneously mixed paste during 10 minutes under vacuum. Said paste was subsequently filled into internally coated aluminum spreading piston cartridges, which were closed airtight and stored under standard climate conditions for at least 24 h until the testing protocol was employed.

Preparation of a silane-functional polymer **P1** (STP-1)

With exclusion of moisture, 1000 g of Acclaim® 12200 polyol (polyoxy-propylenediol having a low level of unsaturation, from Covestro; OH number 11.0 mg KOH/g), 43.6 g of isophorone diisocyanate (IPDI; Vestanat® IPDI, from Evonik), 126.4 g of diisodecyl phthalate (DIDP) and 0.12 g dibutyl tin dilaurate (DBTDL) were heated up to 90°C while stirring constantly and left at this temperature until the content of free isocyanate groups determined by titrimetry had reached a stable value of 0.63% by weight. Subsequently, 63.0 g of diethyl N-(3-trimethoxysilylpropyl)-aminosuccinate (adduct formed from 3-aminopropyltrimethoxysilane and diethyl maleate; prepared according to the details in US 5,364,955) were mixed in and the mixture was stirred at 90°C until it was no longer possible to detect any free isocyanate by means of FT-IR spectroscopy. The polyether containing trimethoxysilane groups thus obtained, having a silane equivalent weight of about 6880 g/eq (calculated from the amounts used), was cooled down to room temperature and stored with exclusion of moisture.

Testing of adhesive bonding properties

Peel strength obtained by bonding the membrane sheets using the adhesive compositions **ADH1** and **ADH2** were measured and the results are shown in Table 3.

Adhesive **ADH2** is a one-component moisture curing polyurethane-based adhesive, which is commercially available under the trade name of SikaBond® TF plus N (from Sika Schweiz AG).

All steps of the measurement procedure including sample preparation, storage and testing were done under standard climate conditions.

The test specimens were prepared according to the following procedure. The adhesive composition **(ADH1** or **ADH2)** was applied onto a surface of the respective substrate (plywood or fiber concrete) with a coating weight of ca. 400 g/m$^2$ using a tooth spatula. After the application of the adhesive, the membrane sheet (backside) was immediately contacted with the still wet adhesive film (wet laying procedure). The membrane sheet was then rolled down 6 times using a 5 kg roller. Conditioning of the sample under standard climate conditions consisted of 2 days under a roller weight of ca. 15 kg/m$^2$, followed by 12 - 26 days without the weight.

Two different types of substrates were used in the measurements; a 3-layer plywood ("plywood") and a roofing tile fiber cement ("fiber cement") substrate. After a defined storage time, the adhesive peel strengths were determined by pulling the membrane sheet at an angle of 90°C from the surface of the respective substrate. The peel strength was determined as N/5 cm. The values for adhesive peel strength obtained with the test specimens are presented in Table 3.

Table 3

| **Composition, [wt.-%]** | **Ref-1** | **Ref-2** | **Ref-3** | **Ex-1** | **Ex-2** | **Ref-4** |
|---|---|---|---|---|---|---|
| Vistamaxx 6202 | | 30.78 | 0.00 | 0.00 | 0.00 | 0.00 |
| Versify 3401 | | 0.00 | 30.78 | 0.00 | 0.00 | 0.00 |
| Versify 2300 | | 0.00 | 0.00 | 40.71 | 40.71 | 40.71 |
| Queo 0203 | | 0.00 | 0.00 | 24.43 | 24.43 | 0.00 |
| Hifax CA 10 A | | 13.26 | 13.26 | 2.92 | 11.06 | 2.92 |
| Hifax CA 212 A | | 6.28 | 6.28 | 0.00 | 0.00 | 24.43 |
| Butyl rubber | | 13.96 | 13.96 | 5.84 | 5.84 | 5.84 |
| Nordel IP 3270 | | 0.00 | 0.00 | 8.14 | 0.00 | 8.14 |
| Omya EX-H1 | | 33.92 | 33.92 | 16.29 | 16.29 | 16.29 |
| Silox Actif | | 0.73 | 0.73 | 0.30 | 0.30 | 0.30 |
| [a]Additive package | | 1.06 | 1.06 | 1.38 | 1.38 | 1.38 |
| Total | | 100.00 | 100.00 | 100.00 | 100.00 | 100.00 |

(continued)

| Composition, [wt.-%] | Ref-1 | Ref-2 | Ref-3 | Ex-1 | Ex-2 | Ref-4 |
|---|---|---|---|---|---|---|
| Bonding with **ADH1,** [N/5 cm] | | | | | | |
| Peel strength, plywood, 14 days | 54 | 35 | 34 | 84 | 118 | 42 |
| Peel strength, plywood, 28 days | 50 | 50 | 56 | 104 | 120 | 62 |
| Peel strength, fiber cement, 14 days | 50 | 60 | 42 | 102 | 118 | 44 |
| Peel strength, fiber cement, 28 days | 52 | 84 | 61 | 116 | 120 | 70 |
| Bonding with **ADH2,** [N/5 cm] | | | | | | |
| Peel strength, plywood, 14 days | 50 | 20 | 31 | 64 | 70 | 30 |
| Peel strength, plywood, 28 days | 48 | 19 | 33 | 59 | 74 | 40 |
| Peel strength, fiber cement, 14 days | 50 | 16 | 29 | 56 | 64 | 30 |
| Peel strength, fiber cement, 28 days | 50 | 20 | 30 | 58 | 62 | 30 |
| [a]Additive package composed of lubricant, thermal stabilizer, UV-stabilizer, and black colorant | | | | | | |

Tensile stress and elongation at break

The tensile stress and elongation at break were measured for samples cut from the membrane sheets in machine and cross machine direction. The measurements were conducted according to EN 12311-2:2013 standard at a temperature of 23°C using a cross head speed of 500 mm/min. The values for tensile stress and elongation at break obtained with the tested membrane sheets are presented in Table 4.

Table 4

| Mechanical properties | Ref-1 | Ref-2 | Ref-3 | Ex-1 | Ex-2 | Ref-4 |
|---|---|---|---|---|---|---|
| Tensile stress (MD) [N/5 cm] | 5.4 | 10.1 | 9.4 | 22.5 | 21 | 19.5 |
| Tensile stress (CD) [N/5 cm] | 5.2 | 5.2 | 6.7 | 23.5 | 23 | 17 |
| Elongation at break (MD) [%] | 350 | 720 | 590 | 880 | 590 | 620 |
| Elongation at break (CD) [%] | 380 | 880 | 840 | 770 | 880 | 920 |
| MD = machine direction, CD = cross machine direction | | | | | | |

## Claims

**1.** A thermoplastic composition comprising:

a) A thermoplastic polymer component **TP** and
b) At least one elastomer **E,** wherein

the thermoplastic polymer component **TP** comprises at least one propylene copolymer **TP1** having a propylene content of at least 60 wt.-%, preferably at least 70 wt.-%, based on the weight of the propylene copolymer and at least one ethylene copolymer **TP2** having an ethylene content of at least 50 wt.-%, preferably at least 55 wt.-%, based on the weight of the ethylene copolymer, wherein the at least one elastomer **E** comprises at least one butyl rubber **E1** and/or at least one ethylene propylene diene monomer rubber **E2** and wherein the at least one propylene copolymer **TP1** is a propylene-ethylene random copolymer having an ethylene content of 5 - 20 wt.-%, based on the weight of the propylene-ethylene random copolymer, and wherein the at least one ethylene copolymer **TP2** is an ethylene-octene random copolymer.

**2.** The thermoplastic composition according to claim 1, wherein the at least one propylene copolymer **TP1** is a propylene-ethylene random copolymer having an ethylene content of 9 - 18 wt.-%, based on the weight of the propylene-ethylene random copolymer.

**3.** The thermoplastic composition according to claim 1 or 2, wherein the at least one propylene copolymer **TP1** comprises 25 - 75 wt.-%, preferably 35 - 65 wt.-%, of the total weight of the thermoplastic composition.

**4.** The thermoplastic composition according to any one of previous claims, wherein the at least one ethylene copolymer **TP2** is an ethylene-octene random copolymer having an octene content of 5 - 45 wt.-%, preferably 10 - 40 wt.-%, based on the weight of the ethylene-octene random copolymer.

**5.** The thermoplastic composition according to any one of previous claims, wherein the at least one ethylene copolymer **TP2** comprises 5 - 45 wt.-%, preferably 10 - 40 wt.-% of the total weight of the thermoplastic composition.

**6.** The thermoplastic composition according to any one of previous claims, wherein the thermoplastic polymer component **TP** further comprises at least one thermoplastic polyolefin elastomer **TP3** different from the at least one propylene copolymer **TP1** and from the at least one ethylene copolymer **TP2,** preferably a heterophasic propylene copolymer.

**7.** The thermoplastic composition according to claim 6, wherein the at least one thermoplastic polyolefin elastomer **TP3** has a flexural modulus at 23°C determined according to ISO 178 standard of not more than 1000 MPa, preferably not more than 750 MPa and/or a melting temperature determined by DSC according to ISO 11357 standard using a heating rate of 2°C/min of at least 100°C, preferably at least 110°C.

**8.** The thermoplastic composition according to claim 6 or 7, wherein the at least one thermoplastic polyolefin elastomer **TP3** comprises 0.1 - 30 wt.-%, preferably 0.5 - 25 wt.-%, of the total weight of the thermoplastic composition.

**9.** The thermoplastic composition according to any one of previous claims, wherein the at least one elastomer **E** comprises 0.5 - 35 wt.-%, preferably 1 - 25 wt.-%, of the total weight of the thermoplastic composition.

**10.** A sealing device comprising a waterproofing layer obtained by using the thermoplastic composition according to any one of previous claims.

**11.** The sealing device according to claim 10, wherein the waterproofing layer has a thickness of 0.1 - 3.5 mm, preferably 0.25 - 2.5 mm.

**12.** A method for producing a sealing device according to claim 10 or 11, the method comprising melt-processing a starting composition comprising the constituents of the thermoplastic composition according to any one of claims 1-9 and melt-shaping the melt-processed starting composition into a form of a shaped article.

**13.** The method according to claim 12, wherein the starting composition further comprises at least one catalyst **CAT** selected from the group consisting of metal oxides, metal salts of fatty acids, metal salts of boric acid, sulfur catalysts, phenol resin catalysts, fatty acids, and mixtures thereof.

**14.** A method for waterproofing a substrate comprising steps of:

I) Providing a sealing device according to claim 10 or 11,
II) Applying a moisture curable adhesive composition **ADH** to at least a portion of a surface of the substrate and/or to at least a portion of a surface of the waterproofing layer,
III) Covering the surface of the substrate with the sealing device such that the applied adhesive composition forms an interlayer between the sealing device and the substrate such that the opposing surfaces of the sealing device and the substrate are directly connected to each other via the interlayer, and
IV) Curing the moisture curable adhesive composition with water, preferably with atmospheric moisture.

**15.** A method for bonding a first substrate **S1** to a second substrate **S2,** the method comprising steps of:

I. Applying a moisture curable adhesive **ADH** onto a surface of at least one of the two substrates,
II. Joining the substrates to each other such that the applied adhesive forms an interlayer between the two substrates such that the opposing surfaces of the substrates are directly connected to each other via the interlayer, and
III. Curing the moisture curable adhesive with water, preferably with atmospheric moisture,

wherein the first substrate **S1** and/or the second substrate **S2** has been obtained by using the thermoplastic composition according to any one of claims 1-9.

**16.** The method according to claim 14 or 15, wherein the moisture curable adhesive composition **ADH** comprises at least one polymer P containing silane and/or isocyanate groups.

**17.** The method according to any one of claims 14-16, wherein the moisture curable adhesive composition **ADH** is an adhesive composition **ADH1** comprising:

- at least one polymer **P1** containing silane groups,
- 10 - 40 wt.-%, based on the total weight of the adhesive composition **ADH1,** of at least one polymeric plasticizer **PL,**
- 0.1 - 5 wt.-%, based on the total weight of the adhesive composition **ADH1,** of at least one monomeric or oligomeric amino-functional alkoxysilane **AS1,** and
- 0.1 - 5 wt.-%, based on the total weight of the adhesive composition **ADH1,** of at least one monomeric or oligomeric C3 - C20 -alkyl-functional alkoxysilane **AS2**

or an adhesive composition **ADH2** comprising:

- at least one polymer **P2** containing isocyanate groups,
- 0.5 - 35 wt.-%, preferably 1.5 - 30 wt.-%, based on the total weight of the adhesive composition **ADH2,** of at least one plasticizer, and
- 1.5 - 60 wt.-%, preferably 2.5 - 55 wt.-%, based on the total weight of the adhesive composition **ADH2,** of at least one organic and/or inorganic filler.

**Patentansprüche**

**1.** Thermoplastische Zusammensetzung, umfassend:

a) eine thermoplastische Polymerkomponente TP und
b) mindestens ein Elastomer E, wobei

die plastische Polymerkomponente TP mindestens ein Propylencopolymer TP1 mit einem Propylengehalt von mindestens 60 Gew.-%, vorzugsweise mindestens 70 Gew.-%, bezogen auf das Gewicht des Propylencopolymers, und mindestens ein Ethylencopolymer TP2 mit einem Ethylengehalt von mindestens 50 Gew.-%, vorzugsweise mindestens 55 Gew.-%, bezogen auf das Gewicht des Ethylencopolymers, umfasst, wobei das mindestens eine Elastomer E mindestens einen Butylkautschuk E1 und/oder mindestens einen Ethylen-Propylen-Dien-Monomer-Kautschuk E2 umfasst und wobei das mindestens eine Propylencopolymer TP1 ein Propylen-Ethylen-Zufallscopolymer mit einem Ethylengehalt von 5-20 Gew.-%, bezogen auf das Gewicht des Propylen-Ethylen-Zufallscopolymers, ist und wobei das mindestens eine Ethylencopolymer TP2 ein Ethylen-Octen-Zufallscopolymer ist.

**2.** Thermoplastische Zusammensetzung nach Anspruch 1, wobei das mindestens eine Propylencopolymer TP1 ein Propylen-Ethylen-Zufallscopolymer mit einem Ethylengehalt von 9-18 Gew.-%, bezogen auf das Gewicht des Propylen-Ethylen-Zufallscopolymers, ist.

**3.** Thermoplastische Zusammensetzung nach Anspruch 1 oder 2, wobei das mindestens eine Propylencopolymer TP1 25-75 Gew.-%, vorzugsweise 35-65 Gew.-%, des Gesamtgewichts der thermoplastischen Zusammensetzung ausmacht.

**4.** Thermoplastische Zusammensetzung nach einem der vorstehenden Ansprüche, wobei das mindestens eine Ethylencopolymer TP2 ein Ethylen-Octen-Zufallscopolymer mit einem Octengehalt von 5-45 Gew.-%, vorzugsweise 10-40 Gew.-%, bezogen auf das Gewicht des Ethylen-Octen-Zufallscopolymers, ist.

**5.** Thermoplastische Zusammensetzung nach einem der vorstehenden Ansprüche, wobei das mindestens eine Ethylencopolymer TP2 5-45 Gew.-%, vorzugsweise 10-40 Gew.-%, des Gesamtgewichts der thermoplastischen Zusammensetzung ausmacht.

**6.** Thermoplastische Zusammensetzung nach einem der vorstehenden Ansprüche, wobei die plastische Polymerkomponente TP ferner mindestens ein thermoplastisches Polyolefinelastomer TP3, das von dem mindestens einen Propylencopolymer TP1 und von dem mindestens einen Ethylencopolymer TP2 verschieden ist, vorzugsweise ein heterophasisches Propylencopolymer, umfasst.

**7.** Thermoplastische Zusammensetzung nach Anspruch 6, wobei das mindestens eine thermoplastische Polyolefinelastomer TP3 einen gemäß ISO-Norm 178 bestimmten Biegemodul bei 23 °C von höchstens 1000 MPa, vorzugsweise höchstens 750 MPa, und/oder eine mittels DSC gemäß ISO-Norm 11357 unter Verwendung einer Aufheizgeschwindigkeit von 2°C/min bestimmte Schmelztemperatur von mindestens 100 °C, vorzugsweise mindestens 110 °C, aufweist.

**8.** Thermoplastische Zusammensetzung nach Anspruch 6 oder 7, wobei das mindestens eine thermoplastische Polyolefinelastomer TP3 0,1-30 Gew.-%, vorzugsweise 0,5-25 Gew.-%, des Gesamtgewichts der thermoplastischen Zusammensetzung, ausmacht.

**9.** Thermoplastische Zusammensetzung nach einem der vorstehenden Ansprüche, wobei das mindestens eine Elastomer E 0,5-35 Gew.-%, vorzugsweise 1-25 Gew.-%, des Gesamtgewichts der thermoplastischen Zusammensetzung ausmacht.

**10.** Dichtvorrichtung, umfassend eine unter Verwendung der thermoplastischen Zusammensetzung nach einem der vorstehenden Ansprüche erhaltene wasserdicht machende Schicht.

**11.** Dichtvorrichtung nach Anspruch 10, wobei die wasserdicht machende Schicht eine Dicke von 0,1-3,5 mm, vorzugsweise 0,25-2,5 mm, aufweist.

**12.** Verfahren zum Herstellen einer Dichtvorrichtung nach Anspruch 10 oder 11, wobei das Verfahren das Schmelzverarbeiten einer Ausgangszusammensetzung, die die Bestandteile der thermoplastischen Zusammensetzung nach einem der Ansprüche 1-9 umfasst, und das Schmelzformen der schmelzverarbeiteten Ausgangszusammensetzung zu einer Form eines Formartikels umfasst.

**13.** Verfahren nach Anspruch 12, wobei die Ausgangszusammensetzung ferner mindestens einen Katalysator CAT umfasst, der ausgewählt ist aus der Gruppe bestehend aus Metalloxiden, Metallsalzen von Fettsäuren, Metallsalzen von Borsäure, Schwefelkatalysatoren, Phenolharzkatalysatoren, Fettsäuren und Gemischen davon.

**14.** Verfahren zum Wasserdichtmachen eines Substrats, umfassend die folgenden Schritte:

I) Bereitstellen einer Dichtvorrichtung nach Anspruch 10 oder 11,
II) Aufbringen einer feuchtigkeitshärtbaren Klebezusammensetzung ADH zumindest auf einen Teil einer Oberfläche des Substrats und/oder zumindest auf einen Teil einer Oberfläche der wasserdicht machenden Schicht,
III) Bedecken der Oberfläche des Substrats mit der Dichtvorrichtung, sodass die aufgebrachte Klebezusammensetzung eine Zwischenschicht zwischen der Dichtvorrichtung und dem Substrat bildet, sodass die gegenüberliegenden Oberflächen der Dichtvorrichtung und des Substrats über die Zwischenschicht direkt miteinander verbunden sind, und
IV) Härten der feuchtigkeitshärtbaren Klebezusammensetzung mit Wasser, vorzugsweise mit Luftfeuchtigkeit.

**15.** Verfahren zum Verbinden eines ersten Substrats S1 mit einem zweiten Substrat S2, wobei das Verfahren die folgenden Schritte umfasst:

I. Aufbringen eines feuchtigkeitshärtbaren Klebstoffs ADH auf eine Oberfläche von mindestens einem der zwei Substrate,
II. Verbinden der Substrate miteinander, sodass der aufgebrachte Klebstoff eine Zwischenschicht zwischen den zwei Substraten bildet, sodass die gegenüberliegenden Oberflächen der Substrate über die Zwischenschicht direkt miteinander verbunden sind, und
III. Härten des feuchtigkeitshärtbaren Klebstoffs mit Wasser, vorzugsweise mit Luftfeuchtigkeit,

wobei das erste Substrat S1 und/oder das zweite Substrat S2 unter Verwendung der thermoplastischen Zusammensetzung nach einem der Ansprüche 1-9 erhalten wurden.

16. Verfahren nach Anspruch 14 oder 15, wobei die feuchtigkeitshärtbare Klebezusammensetzung ADH mindestens ein Polymer P umfasst, das Silan- und/oder Isocyanatgruppen enthält.

17. Verfahren nach einem der Ansprüche 14-16, wobei die feuchtigkeitshärtbare Klebezusammensetzung ADH eine Klebezusammensetzung ADH1 ist, umfassend:

- mindestens ein Polymer P1, das Silangruppen enthält,
- zu 10-40 Gew.-%, bezogen auf das Gesamtgewicht der Klebezusammensetzung ADH1, mindestens einen polymeren Weichmacher PL,
- zu 0,1-5 Gew.-%, bezogen auf das Gesamtgewicht der Klebezusammensetzung ADH1, mindestens ein monomeres oder oligomeres Alkoxysilan mit Aminofunktionalität AS1 und
- zu 0,1-5 Gew.-%, bezogen auf das Gesamtgewicht der Klebezusammensetzung ADH1, mindestens ein monomeres oder oligomeres Alkoxysilan mit C3-C20-Alkyl-Funktionalität AS2

oder eine Klebezusammensetzung ADH2 ist, umfassend:

- mindestens ein Polymer P2, das Isocyanatgruppen enthält,
- zu 0,5-35 Gew.-%, vorzugsweise zu 1,5-30 Gew.-%, bezogen auf das Gesamtgewicht der Klebezusammensetzung ADH2, mindestens einen Weichmacher und
- zu 1,5-60 Gew.-%, vorzugsweise zu 2,5-55 Gew.-%, bezogen auf das Gesamtgewicht der Klebezusammensetzung ADH2, mindestens einen organischen und/oder anorganischen Füllstoff.

## Revendications

1. Composition thermoplastique comprenant :

a) un composant polymère thermoplastique TP et
b) au moins un élastomère E, dans laquelle

le composant polymère thermoplastique TP comprend au moins un copolymère de propylène TP1 ayant une teneur en propylène d'au moins 60 % en poids, de préférence d'au moins 70 % en poids, par rapport au poids du copolymère de propylène, et au moins un copolymère d'éthylène TP2 ayant une teneur en éthylène d'au moins 50 % en poids, de préférence d'au moins 55 % en poids, par rapport au poids du copolymère d'éthylène, dans laquelle l'au moins un élastomère E comprend au moins un caoutchouc de butyle E1 et/ou au moins un caoutchouc de monomères d'éthylène propylène diène E2 et dans laquelle l'au moins un copolymère de propylène TP1 est un copolymère statistique de propylène-éthylène ayant une teneur en éthylène de 5 à 20 % en poids, sur la base du poids du copolymère statistique de propylène-éthylène, et dans laquelle l'au moins un copolymère d'éthylène TP2 est un copolymère statistique d'éthylène-octène.

2. Composition thermoplastique selon la revendication 1, dans laquelle l'au moins un copolymère de propylène TP1 est un copolymère statistique de propylène-éthylène ayant une teneur en éthylène de 9 à 18 % en poids, sur la base du poids du copolymère statistique de propylène-éthylène.

3. Composition thermoplastique selon la revendication 1 ou 2, dans laquelle l'au moins un copolymère de propylène TP1 représente 25 à 75 % en poids, de préférence 35 à 65 % en poids, du poids total de la composition thermoplastique.

4. Composition thermoplastique selon l'une quelconque des revendications précédentes, dans laquelle l'au moins un copolymère d'éthylène TP2 est un copolymère statistique d'éthylène-octène ayant une teneur en octène de 5 à 45 % en poids, de préférence de 10 à 40 % en poids, sur la base du poids du copolymère statistique d'éthylène-octène.

5. Composition thermoplastique selon l'une quelconque des revendications précédentes, dans laquelle l'au moins un copolymère d'éthylène TP2 représente 5 à 45 % en poids, de préférence 10 à 40 % en poids du poids total de la composition thermoplastique.

6. Composition thermoplastique selon l'une quelconque des revendications précédentes, dans laquelle le composant polymère thermoplastique TP comprend en outre au moins un élastomère de polyoléfine thermoplastique TP3 différent de l'au moins un copolymère de propylène TP1 et de l'au moins un copolymère d'éthylène TP2, de

préférence un copolymère de propylène hétérophasique.

7. Composition thermoplastique selon la revendication 6, dans laquelle l'au moins un élastomère de polyoléfine thermoplastique TP3 a un module de flexion à 23 °C déterminé selon la norme ISO 178 non supérieur à 1 000 MPa, de préférence non supérieur à 750 MPa et/ou une température de fusion déterminée par DSC selon la norme ISO 11357 en utilisant une vitesse de chauffage de 2 °C/min d'au moins 100 °C, de préférence au moins 110 °C.

8. Composition thermoplastique selon la revendication 6 ou 7, dans laquelle l'au moins un élastomère de polyoléfine thermoplastique TP3 représente 0,1 à 30 % en poids, de préférence 0,5 à 25 % en poids, du poids total de la composition thermoplastique.

9. Composition thermoplastique selon l'une quelconque des revendications précédentes, dans laquelle l'au moins un élastomère E représente 0,5 à 35 % en poids, de préférence 1 à 25 % en poids, du poids total de la composition thermoplastique.

10. Dispositif d'étanchéité comprenant une couche imperméabilisante à l'eau obtenue en utilisant la composition thermoplastique selon l'une quelconque des revendications précédentes.

11. Dispositif d'étanchéité selon la revendication 10, dans lequel la couche imperméabilisante à l'eau a une épaisseur de 0,1 à 3,5 mm, de préférence de 0,25 à 2,5 mm.

12. Procédé de production d'un dispositif d'étanchéité selon la revendication 10 ou 11, le procédé comprenant le traitement à l'état fondu d'une composition de départ comprenant les constituants de la composition thermoplastique selon l'une quelconque des revendications 1 à 9 et la mise en forme à l'état fondu de la composition de départ traitée à l'état fondu sous une forme d'un article façonné.

13. Procédé selon la revendication 12, dans lequel la composition de départ comprend en outre au moins un catalyseur CAT choisi dans le groupe constitué des oxydes métalliques, des sels métalliques d'acides gras, des sels métalliques d'acide borique, des catalyseurs au soufre, des catalyseurs à résine phénolique, des acides gras et leurs mélanges.

14. Procédé d'imperméabilisation à l'eau d'un substrat comprenant les étapes de :

I) fourniture d'un dispositif d'étanchéité selon la revendication 10 ou 11,
II) application d'une composition d'adhésif durcissable à l'humidité ADH sur au moins une partie d'une surface du substrat et/ou sur au moins une partie d'une surface de la couche imperméabilisante à l'eau,
III) couverture de la surface du substrat avec le dispositif d'étanchéité de sorte que la composition d'adhésif appliquée forme une couche intermédiaire entre le dispositif d'étanchéité et le substrat de sorte que les surfaces opposées du dispositif d'étanchéité et du substrat soient directement reliées l'une à l'autre par l'intermédiaire de la couche intermédiaire, et
IV) durcissement de la composition d'adhésif durcissable à l'humidité avec de l'eau, de préférence avec de l'humidité atmosphérique.

15. Procédé de liaison d'un premier substrat S1 à un deuxième substrat S2, le procédé comprenant les étapes de :

I. application d'un adhésif durcissable à l'humidité ADH sur une surface d'au moins un des deux substrats,
II. assemblage des substrats l'un à l'autre de sorte que l'adhésif appliqué forme une couche intermédiaire entre les deux substrats de sorte que les surfaces opposées des substrats soient directement reliées l'une à l'autre par l'intermédiaire de la couche intermédiaire, et
III. durcissement de l'adhésif durcissable à l'humidité avec de l'eau, de préférence avec de l'humidité atmosphérique,

dans lequel le premier substrat S1 et/ou le deuxième substrat S2 a été obtenu en utilisant la composition thermoplastique selon l'une quelconque des revendications 1 à 9.

16. Procédé selon la revendication 14 ou 15, dans lequel la composition d'adhésif durcissable à l'humidité ADH comprend au moins un polymère P contenant des groupes silane et/ou isocyanate.

17. Procédé selon l'une quelconque des revendications 14 à 16, dans lequel la composition d'adhésif durcissable à

l'humidité ADH est une composition d'adhésif ADH1 comprenant :

- au moins un polymère P1 contenant des groupes silane,
- 10 à 40 % en poids, par rapport au poids total de la composition d'adhésif ADH1, d'au moins un plastifiant polymérique PL,
- 0,1 à 5 % en poids, par rapport au poids total de la composition d'adhésif ADH1, d'au moins un alcoxysilane monomérique ou oligomérique à fonction amino AS1, et
- 0,1 à 5 % en poids, par rapport au poids total de la composition d'adhésif ADH1, d'au moins un alcoxysilane monomérique ou oligomérique à fonction alkyle en C3-C20 AS2

ou une composition d'adhésif ADH2 comprenant :

- au moins un polymère P2 contenant des groupes isocyanate,
- 0,5 à 35 % en poids, de préférence 1,5 à 30 % en poids, par rapport au poids total de la composition d'adhésif ADH2, d'au moins un plastifiant, et
- 1,5 à 60 % en poids, de préférence 2,5 à 55 % en poids, par rapport au poids total de la composition d'adhésif ADH2, d'au moins une charge organique et/ou inorganique.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 20070208139 A1
- WO 2014079613 A1
- WO 2020030607 A1
- US 5364955 A


### Non-patent literature cited in the description


- *CHEMICAL ABSTRACTS*, 129757-67-1